# EUROPEAN PATENT SPECIFICATION

(11) **EP 3 815 998 B1**
(45) Date of publication and mention of the grant of the patent: **17.09.2025**
(21) Application number: 19827570.3
(22) Date of filing: 24.06.2019
(51) Int. Cl.: B60T 8/48, B60T 8/34, F16J 3/02, F16K 15/18, F16K 17/22, F16K 31/365

(54) **VEHICLE BRAKE HYDRAULIC PRESSURE CONTROL DEVICE**
STEUERUNGSVORRICHTUNG FÜR DEN BREMSHYDRAULIKDRUCK EINER FAHRZEUGBREMSE
DISPOSITIF DE RÉGULATION DE PRESSION HYDRAULIQUE DE FREIN DE VÉHICULE

(30) Priority: 28.06.2018 JP 2018123669; 29.03.2019 JP 2019069141
(43) Date of publication of application: 05.05.2021
(73) Proprietor: Astemo, Ltd., Tokyo 100-0004 (JP)
(72) Inventor: KODAMA, Takuro, Tomi-shi, Nagano 389-0514 (JP); SHIMONO, Takuyo, Tomi-shi, Nagano 389-0514 (JP)
(74) Representative: Dehns
(86) International application number: PCT/JP2019/024923
(87) International publication number: WO 2020/004312

(56) References cited:
- DE-A1- 102013 202 913
- JP-A- 2011 027 164
- JP-A- 2012 126 348
- JP-A- 2012 126 348
- JP-A- 2013 241 149
- JP-A- 2017 019 477

## Description

### Technical Field

The present invention relates to a vehicle brake hydraulic pressure control device.

### Background Art

Disclosed in Japanese Patent No. 5304446 is a vehicle brake hydraulic pressure control device configured to boost hydraulic pressure in a master cylinder by an operation of a pump during pressure-increasing and cause the hydraulic pressure to act on a wheel brake. The vehicle brake hydraulic pressure control device includes a pressure-adjusting reservoir connected between the master cylinder and an intake port of the pump. The pressure-adjusting reservoir includes a reservoir and a mechanical suction valve that includes a diaphragm configured to be operated mechanically by a pressure difference.

JP 2012 126348A and DE 10 2013 202913A1 disclose further vehicle brake hydraulic pressure control devices.

### Summary of Invention

### Technical Problem

The vehicle brake hydraulic pressure control device of Japanese Patent No. 5304446 employs a structure in which the reservoir and the suction valve are integrally provided and the diaphragm is disposed on a reservoir piston. Therefore, a size of the diaphragm depends on the size of the reservoir piston. Therefore, in Japanese Patent No. 5304446, it has been difficult to set a large effective diameter for the diaphragm.

If the diaphragm cannot be set to have a large effective diameter, a thrust force of the diaphragm required for opening the suction valve can hardly be obtained when a brake hydraulic pressure input from a master cylinder side is relatively high.

In addition, in the vehicle brake hydraulic pressure control device used for vehicles with a bar handle such as motorcycles or three-wheeled vehicles, miniaturization of the entire device and miniaturization of individual components such as the suction valve are required in consideration of mountability on the vehicle.

The present invention is directed to solve the above-described problems, and to provide a vehicle brake hydraulic pressure control device capable of improving openability of a suction valve and achieving miniaturization.

### Solution to Problem

In order to solve the above problem, an aspect of the present invention provides a vehicle brake hydraulic pressure control device according to claim 1.

There is disclosed a vehicle brake hydraulic pressure control device provided between a master cylinder and a wheel brake and including a base body, a pump, and a drive source for driving the pump. The vehicle brake hydraulic pressure control device includes a suction valve disposed between the master cylinder and intake ports of the pump. The suction valve is opened by a pressure difference between a brake hydraulic pressure on the master cylinder side and a brake hydraulic pressure on an intake port side of the pumps, at which a vacuum is created when the pumps are operated. The suction valve includes a normally-closed one-way valve, a plunger configured to come into contact with and open a valve body of the one-way valve, and a diaphragm configured to push the plunger and bias the one-way valve in a valve-opening direction when a vacuum is created on the intake port side by an operation of the pump. The one-way valve is accommodated in an accommodating part provided on the base body, and the diaphragm is configured to have an effective diameter larger than an inner diameter of the accommodating part.

A mounting hole for accommodating the suction valve is formed in the base body, an annular seal portion that comes into tight contact with an inner peripheral surface of the mounting hole is formed on the diaphragm, and the seal portion includes a first seal portion that comes into tight contact with an inner peripheral surface of the mounting hole on the opening side and an annular cup seal portion continuing from the first seal portion, extending to a side of the mounting hole opposite from an opening and coming into tight contact with the inner peripheral surface of the mounting hole.

In the present invention, the diaphragm having the effective diameter larger than the inner diameter of the accommodating part for accommodating the one-way valve enables enhancement of workability of the diaphragm even when the brake hydraulic pressure from the master cylinder side is relatively high. Therefore, improvement of the openability of the suction valve is achieved.

When the reservoir is provided, the reservoir and the suction valve may be provided separately, so that miniaturization of the suction valve itself is enabled.

In the above configuration, sealing on a side closer to an exterior of the base body and sealing on an opposite side closer to an interior of the base body may be achieved by the first seal portion and the cup seal portion separately, so that sealing property of the diaphragm may be improved.

In addition, providing the cup seal portion may prevent the brake fluid from leaking out when receiving the brake fluid on the master cylinder side, for example, in a case where the suction valve is immobilized in an opened state.

Preferably, the one-way valve includes a small diameter valve and a large diameter valve having a diameter larger than the small diameter valve.

In this configuration, since biasing forces to be applied to the one-way valve in the valve-opening direction may be set separately for the small diameter valve and the large diameter valve, the biasing force for the small diameter valve in the valve-opening direction does not have to be set to a large force more than necessary. In addition, during boosting, the large diameter valve may be opened to secure a boosting capacity.

Preferably, the large diameter valve is provided so as to surround the small diameter valve.

In this configuration, a combination of the small diameter valve and the large diameter valve may be configured to have a compact profile.

Preferably, when a valve seat on which the one-way valve is to be seated and a valve spring for biasing the one-way valve are provided, the one-way valve, the valve seat and the valve spring are unitized and attached to the base body.

In this configuration, assembleability of the suction valve is improved. Accordingly, cost reduction is achieved.

Preferably, a plug configured to close an opening side of the accommodating part and fix the diaphragm in the accommodating part is provided.

In this configuration, the diaphragm can be fixed reliably to the base body by the plug.

Preferably, the accommodating part is provided with a reservoir in which a reservoir chamber is formed by the diaphragm swelling toward the plug.

In this configuration, the diaphragm is subject to elastic deformation and is swelled toward the plug, for example, by a flow of operating fluid relieved from the wheel brake into the reservoir chamber at the time of pressure-decreasing of the anti-locking braking control, so that the reservoir chamber is changed in capacity and the operating fluid is accommodated. In this manner, since the reservoir can be configured in a simple configuration using the elastic deformation of the diaphragm, the number of components may be reduced to reduce costs.

Preferably, a retaining part configured to engage the diaphragm is provided in the plug.

In this configuration, a component specific for retention does not have to be prepared separately.

Preferably, the plunger has a polygonal shape in cross section orthogonal to an axial direction.

In this configuration, a path may be formed on an outer peripheral surface of the plunger, and thus improvement in communicability of the brake fluid is achieved. Furthermore, since the pressure may be canceled by equalizing the brake hydraulic pressures (received pressures) at the front and at the rear of the plunger, improvement of workability of the plunger is achieved.

Preferably, an atmosphere communicating hole that communicates with atmosphere is formed in the plug.

In this configuration, the accommodating part may easily be communicated with the atmosphere.

### Advantageous Effects of the Invention

The present invention provides the vehicle brake hydraulic pressure control device capable of improving openability of the suction valve and achieving miniaturization.

### Brief Description of the Drawings

[Fig. 1] Fig. 1 is a perspective view illustrating a vehicle brake hydraulic pressure control device according to a first embodiment of the present invention.
[Fig. 2] Fig. 2 is a hydraulic pressure circuit diagram of the vehicle brake hydraulic pressure control device according to the first embodiment of the present invention.
[Fig. 3] Fig. 3 illustrates a base body of the vehicle brake hydraulic pressure control device according to the first embodiment of the present invention, in which (a) is a top view, (b) is a front view, (c) is a left side view, and (d) is a right side view6
[Fig. 4] Fig. 4 illustrates the base body of the same, in which (a) is a rear view, and (b) is a bottom view.
[Fig. 5] Fig. 5 is a drawing visualizing inner surfaces of respective mounting holes and flow paths formed in a flow path component of the vehicle brake hydraulic pressure control device according to the first embodiment of the present invention, in which (a) is a transparent view viewed from the front, and (b) is a transparent view viewed from the right side.
[Fig. 6] Fig. 6 is a drawing visualizing inner surfaces of the respective mounting holes and flow paths formed in the flow path component of the vehicle brake hydraulic pressure control device according to the first embodiment of the present invention, in which (a) is a transparent view viewed from the rear, and (b) is a transparent view viewed from the left side.
[Fig. 7] Fig. 7 is a drawing visualizing inner surfaces of the respective mounting holes and flow paths formed in the flow path component of the vehicle brake hydraulic pressure control device according to the first embodiment of the present invention, in which (a) is a transparent view viewed from the top, and (b) is a transparent view viewed from the bottom.
[Fig. 8] Fig. 8 is a drawing visualizing inner surfaces of the respective mounting holes and flow paths formed in the flow path component of the vehicle brake hydraulic pressure control device according to the first embodiment of the present invention and is a perspective view viewed from the front side.
[Fig. 9] Fig. 9 is a drawing visualizing inner surfaces of the respective mounting holes and flow paths formed in the flow path component of the vehicle brake hydraulic pressure control device according to the first embodiment of the present invention and is a perspective view viewed from the rear side.
[Fig. 10A] Fig. 10A is an enlarged cross-sectional view illustrating a suction valve according to the first embodiment of the present invention.
[Fig. 10B] Fig. 10B is a cross-sectional view illustrating an effective diameter of a diaphragm of the suction valve according to the first embodiment of the present invention.
[Fig. 11A] Fig. 11A is a hydraulic pressure circuit diagram illustrating a flow of a brake fluid during a normal brake operation by operating a pedal according to the first embodiment of the present invention.
[Fig. 11B] Fig. 11B is a hydraulic pressure circuit diagram illustrating a flow of the brake fluid when pressurized by the pumps with the pedal not operated according to the first embodiment of the present invention.
[Fig. 11C] Fig. 11C is a cross-sectional view illustrating a state of operation of the suction valve when pressurized by the pumps with the pedal not operated according to the first embodiment of the present invention.
[Fig. 11D] Fig. 11D is a hydraulic pressure circuit diagram illustrating a flow of the brake fluid when pressurized by the pumps with the pedal operated according to the first embodiment of the present invention.
[Fig. 11E] Fig. 11E is a cross-sectional view illustrating a state of operation of the suction valve when pressurized by the pumps with the pedal operated according to the first embodiment of the present invention.
[Fig. 12] Figs. 12(a) to (c) are explanatory drawings illustrating phases of discharge of the pump according to the first embodiment of the present invention.
[Fig. 13A] Fig. 13A is an explanatory drawing illustrating a flow of the brake fluid during the normal brake operation by operating a pedal according to the first embodiment of the present invention.
[Fig. 13B] Fig. 13B is a hydraulic pressure circuit diagram illustrating a flow of a brake fluid when pressurized by the pumps with the pedal not operated, with the pedal operated according to the first embodiment of the present invention.
[Fig. 14] Fig. 14 is a hydraulic pressure circuit diagram of a brake hydraulic pressure control device according to a second embodiment of the present invention.
[Fig. 15A] Fig. 15A is a cross-sectional view illustrating a suction valve of the brake hydraulic pressure control device according to the second embodiment of the present invention.
[Fig. 15B] Fig. 15B is a cross-sectional view illustrating an effective diameter of a diaphragm of the suction valve of the brake hydraulic pressure control device according to the second embodiment of the present inventionT
[Fig. 16A] Fig. 16A is a hydraulic pressure circuit diagram illustrating a flow of an operating fluid during a normal brake control by operating a pedal in the brake hydraulic pressure control device according to the second embodiment of the present invention.
[Fig. 16B] Fig. 16B is a hydraulic pressure circuit diagram illustrating a flow of the operating fluid during pressure-decreasing in an anti-locking braking control in the brake hydraulic pressure control device according to the second embodiment of the present invention.
[Fig. 17A] Fig. 17A is a hydraulic pressure circuit diagram illustrating a flow of the operating fluid during pressure-increasing in the anti-locking braking control in the brake hydraulic pressure control device according to the second embodiment of the present invention.
[Fig. 17B] Fig. 17B is a hydraulic pressure circuit diagram illustrating a flow of the operating fluid while maintaining the anti-locking braking control in the brake hydraulic pressure control device according to the second embodiment of the present invention.
[Fig. 18A] Fig. 18A is a hydraulic pressure circuit diagram illustrating a flow of an operating fluid of pressurizing brake control with the pedal not operated in the brake hydraulic pressure control device according to the second embodiment of the present invention.
[Fig. 18B] Fig. 18B is a cross-sectional view illustrating a state of operation of the suction valve in the pressurizing brake control with the pedal not operated in the brake hydraulic pressure control device according to the second embodiment of the present invention.
[Fig. 19A] Fig. 19A is a hydraulic pressure circuit diagram illustrating a flow of the operating fluid of the pressurizing brake control with the pedal operated in the brake hydraulic pressure control device according to the second embodiment of the present invention.
[Fig. 19B] Fig. 19B is a cross-sectional view illustrating a state of the operation of the suction valve in the pressurizing brake control with the pedal operated in the brake hydraulic pressure control device according to the second embodiment of the present invention.
[Fig. 20] Fig. 20 is a hydraulic pressure circuit diagram of a brake hydraulic pressure control device according to a third embodiment of the present invention.
[Fig. 21A] Fig. 21A is a cross-sectional view illustrating a suction valve of the brake hydraulic pressure control device according to the third embodiment of the present invention.
[Fig. 21B] Fig. 21B is a cross-sectional view illustrating an effective diameter of a diaphragm of the suction valve of the brake hydraulic pressure control device according to the third embodiment of the present invention.
[Fig. 22] Fig. 22 is a hydraulic pressure circuit diagram illustrating a flow of an operating fluid during a normal brake control by operating a pedal according to the third embodiment of the present invention.
[Fig. 23A] Fig. 23A is a hydraulic pressure circuit diagram illustrating a flow of the operating fluid during pressure-decreasing of an anti-locking braking control according to the third embodiment of the present invention.
[Fig. 23B] Fig. 23B is a cross-sectional view illustrating a state of operation of the suction valve at the time of pressure-decreasing in the anti-locking braking control according to the third embodiment of the present invention.
[Fig. 24A] Fig. 24A is a hydraulic pressure circuit diagram illustrating a flow of the operating fluid during pressure-increasing in the anti-locking braking control according to the third embodiment of the present invention.
[Fig. 24B] Fig. 24B is a hydraulic pressure circuit diagram illustrating a flow of the operating fluid while maintaining the anti-locking braking control according to the third embodiment of the present invention.
[Fig. 25A] Fig. 25A is a hydraulic pressure circuit diagram illustrating a flow of the operating fluid in pressurizing brake control with the pedal not operated according to the third embodiment of the present invention.
[Fig. 25B] Fig. 25B is a cross-sectional view illustrating a state of operation of the suction valve in the pressurizing brake control with the pedal not operated according to the third embodiment of the present invention.
[Fig. 26A] Fig. 26A is a hydraulic pressure circuit diagram illustrating a flow of the operating fluid in the pressurizing brake control with the pedal operated according to the third embodiment of the present inventionT
[Fig. 26B] Fig. 26B is a cross-sectional view illustrating a state of operation of the suction valve in the pressurizing brake control with the pedal operated according to the third embodiment of the present invention. Description of Embodiments

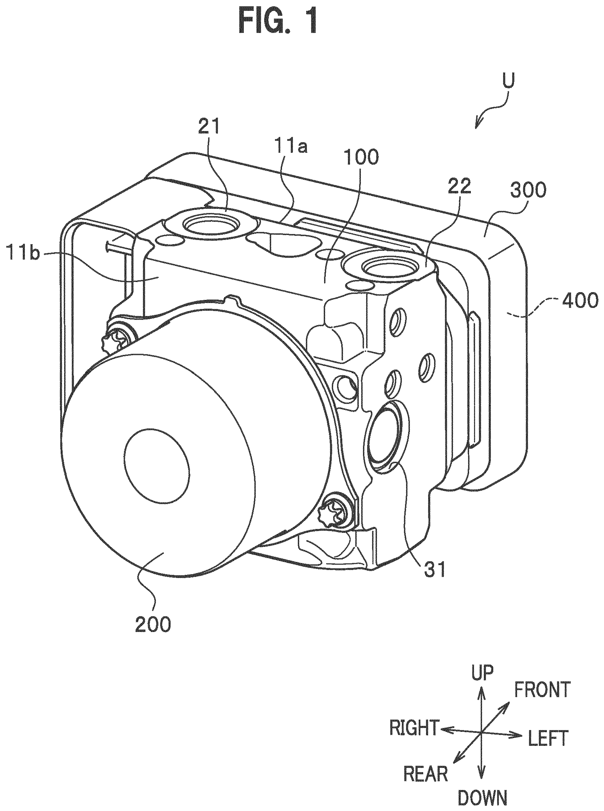

Referring to the drawings as needed, an embodiment of the present invention will be described below in detail. In the following description, when expressing front, rear, up, down, left and right of the vehicle brake hydraulic pressure control device, directions illustrated in Fig. 1 are used as a reference. Note that the directions illustrated in Fig. 1 do not necessarily match the actual state of installation of the device. In the following description, the same components are designated by the same reference signs, and overlapped description will be omitted. Also, in the following, the vehicle brake hydraulic pressure control device of the present embodiment is described as being applied to a vehicle with a bar handle such as motorcycles, three-wheeled vehicles and all terrain vehicles (ATV) for example. However, the description is not intended to limit the vehicles for mounting the device of the present embodiment.

### (First Embodiment)

As illustrated in Fig. 1, a vehicle brake hydraulic pressure control device (hereinafter, referred to simply as "brake hydraulic pressure control device") U of the present embodiment is used for vehicles with a bar handle such as motorcycles, three-wheeled vehicles, and all terrain vehicles (ATV). Preferably, the vehicles for mounting the device has a front wheel brake unit and a rear wheel brake unit separated from each other. In the present embodiment, a brake hydraulic pressure control device configured to control the brake hydraulic pressure acting on a rear wheel brake will be described.

### (Configuration of Brake Hydraulic Pressure control device)

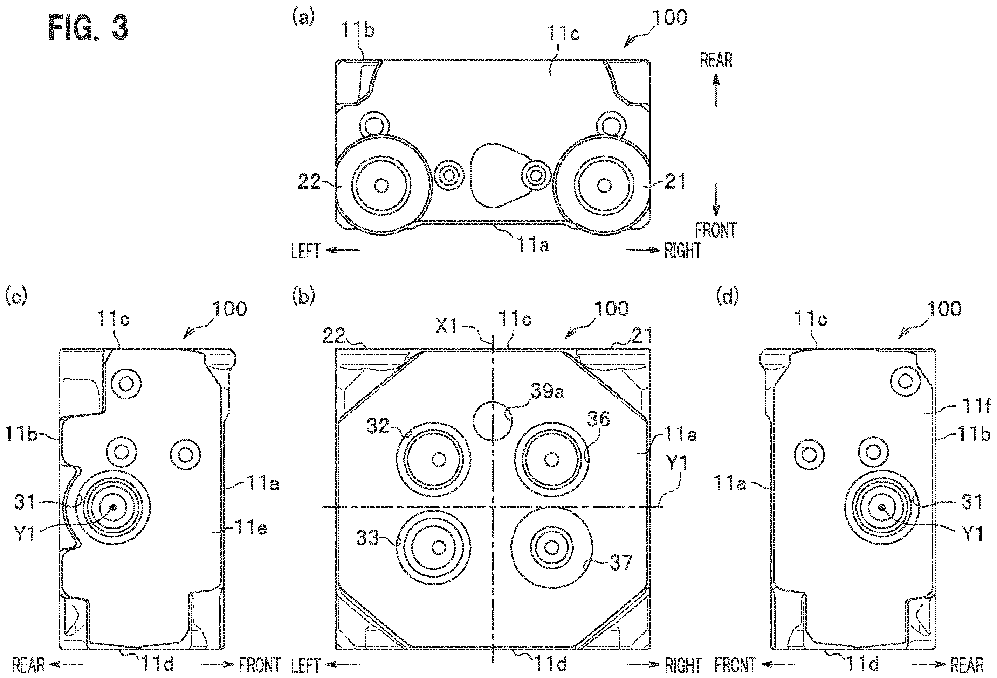

The brake hydraulic pressure control device U includes a base body 100, a motor (electric motor) 200 as a drive source, a control housing 300, and a control device 400 as illustrated in Fig. 1. The electric motor 200 is attached to a rear surface 11b of the base body 100. The control housing 300 is attached to a front surface 11a of the base body 100 (see Fig. 3(b)). The control device 400 is accommodated in the control housing 300.

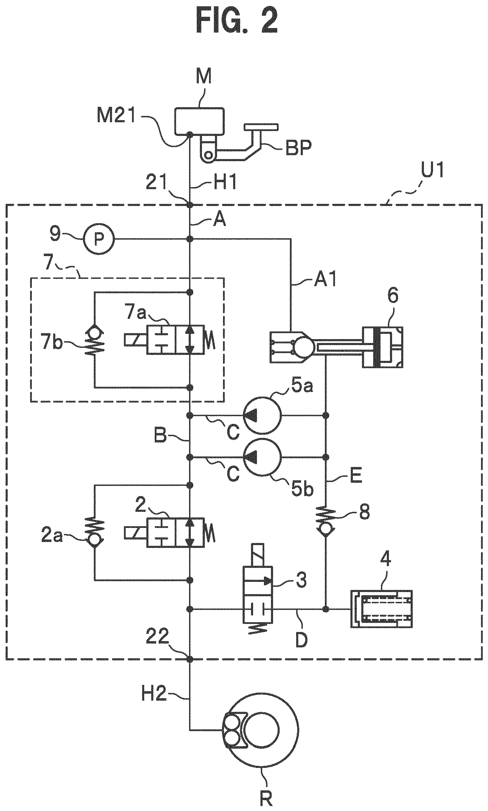

The brake hydraulic pressure control device U is an embodied hydraulic pressure circuit U1 illustrated in Fig. 2. The brake hydraulic pressure control device U can execute anti-locking braking control of a wheel brake R and pressurization control of the wheel brake R.

Note that, in the following, the fluid path extending from the master cylinder M to a regulator 7 is referred to as "output hydraulic pressure line A", and a flow path extending from the regulator 7 to an outlet valve 3 and the wheel brake R is referred to as "wheel hydraulic pressure line B". A pair of flow paths extending from pumps 5a, 5b to the wheel hydraulic pressure line B are referred to as "discharge hydraulic pressure lines C, C", and further, a flow path extending from the outlet valve 3 to a reservoir 4 is referred to as "release line D". A flow path extending from the reservoir 4 to the pumps 5a, 5b and a suction valve 6 is referred to as "intake hydraulic pressure line E". A flow path branched from the output hydraulic pressure line A and reaches to the suction valve 6 is referred to as "branch hydraulic pressure line A1".

In Fig. 2, the brake hydraulic pressure circuit U1 of the brake hydraulic pressure control device U is a circuit extending from an inlet port 21 to an outlet port 22. A pipe H1 connected to an output port M21 of the master cylinder M, which is a hydraulic pressure source, is connected to the inlet port 21. A pipe H2 extending to the wheel brake R is connected to the outlet port 22.

The inlet port 21 is formed on a right area of an upper surface 11c of the base body 100 as illustrated in Fig. 3(a). The outlet port 22 is formed on a left area of the upper surface 11c of the base body 100, which is on an opposite side from the inlet port 21.

Returning back to Fig. 2, a brake pedal BP, which is a brake operation element, is connected to the master cylinder M. The hydraulic pressure circuit U1 mainly includes an inlet valve 2, the outlet valve 3, the reservoir 4, the pumps 5a, 5b, the suction valve 6, and the regulator 7.

The master cylinder M produces a brake hydraulic pressure according to a force applied to the brake pedal BP by a driver. The master cylinder M is connected to the wheel brake R (wheel cylinder) via the pipe H1, the output hydraulic pressure line A, the wheel hydraulic pressure line B, and the pipe H2.

The fluid paths connected to the master cylinder M (output hydraulic pressure line A and wheel hydraulic pressure line B) normally communicate the master cylinder M with the wheel brake R. Accordingly, the brake hydraulic pressure generated by an operation of the brake pedal BP is transmitted to the wheel brake R.

The regulator 7, the inlet valve 2, and the outlet valve 3 are provided on the fluid path connecting the master cylinder M and the wheel brake R.

The regulator 7 has a function of switching a state of conduction of the brake fluid in the output hydraulic pressure line A between an allowing state and a blocked state. The regulator 7 has a function of adjusting the brake hydraulic pressure in the wheel hydraulic pressure line B to a level below a predetermined value when the conduction of the brake fluid in the output hydraulic pressure line A is blocked. The regulator 7 includes a cut valve 7a and a check valve 7b.

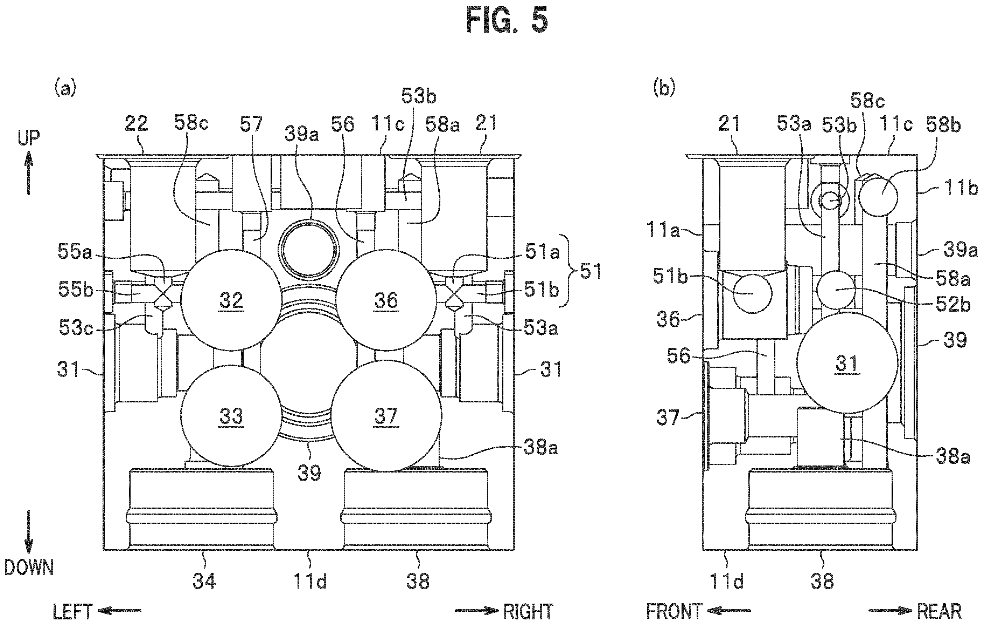

The regulator 7 is mounted in a cut valve mounting hole 36 formed on a right upper portion of the front surface 11a of the base body 100 as illustrated in Fig. 3(b) and Fig. 5(a). The cut valve mounting hole 36 is formed at a position on an upper side with respect to a pump axis Y1 of a right pump mounting hole 31 (see Fig. 5(b)) in a right area of left and right halves delimited by a reference plane X1 orthogonal to the front surface 11a of the base body 100 as illustrated in Fig. 3(b). Note that the pump axis Y1 is a center axial line of the left and right pump mounting holes 31, 31. The reference plane X1 is a plane having the pump axis Y1 as a normal line and is a plane including a motor shaft, not illustrated, of the electric motor 200.

Returning back to Fig. 2, the cut valve 7a is a normally-opened linear solenoid valve interposed between the output hydraulic pressure line A and the wheel hydraulic pressure line B. The cut valve 7a is configured to switch a state of conduction of the brake fluid from the output hydraulic pressure line A to the wheel hydraulic pressure line B between an allowing state and a blocked state. In other words, the cut valve 7a has a configuration capable of adjusting a valve-opening pressure by controlling energization of the solenoid (a configuration having also a function of a relief valve).

When the cut valve 7a is in a valve-opened state, it is a state allowing the brake fluid discharged from the pumps 5a, 5b to the discharge hydraulic pressure lines C, C and flowed into the wheel hydraulic pressure line B to flow back (to circulate) to the intake hydraulic pressure line E through the output hydraulic pressure line A, the branch hydraulic pressure line A1, and the suction valve 6.

The cut valve 7a is closed under the control of the control device 400 (see Fig. 1, the same applies to the description below) when performing pressurization control, which will be described later. When the brake hydraulic pressure of the wheel hydraulic pressure line B exceeds the brake hydraulic pressure of the output hydraulic pressure line A, and a difference in pressure between the brake hydraulic pressure of the output hydraulic pressure line A and the hydraulic pressure of the wheel hydraulic pressure line B exceeds a force of closing the valve, which is controlled by energization to the solenoid, the cut valve 7a releases the brake hydraulic pressure of the wheel hydraulic pressure line B toward the output hydraulic pressure line A for adjustment.

The check valve 7b is connected in parallel to the cut valve 7a. The check valve 7b is a one-way valve which allows a flow of the brake fluid from the output hydraulic pressure line A to the wheel hydraulic pressure line B. The check valve 7b is integrally provided with a normally-opened solenoid valve which constitutes the regulator 7.

The inlet valve 2 includes the normally-opened solenoid valve provided in the wheel hydraulic pressure line B, and is provided between the regulator 7 and the wheel brake R. The inlet valve 2, when in the valve-opened state, allows transmission of brake hydraulic pressure from the master cylinder M or brake fluid boosted in pressure by the pumps 5a, 5b to the wheel brake R. The inlet valve 2 also blocks the brake hydraulic pressure applied to the wheel brake R by being blocked by the control device 400 when the wheels are about to be locked.

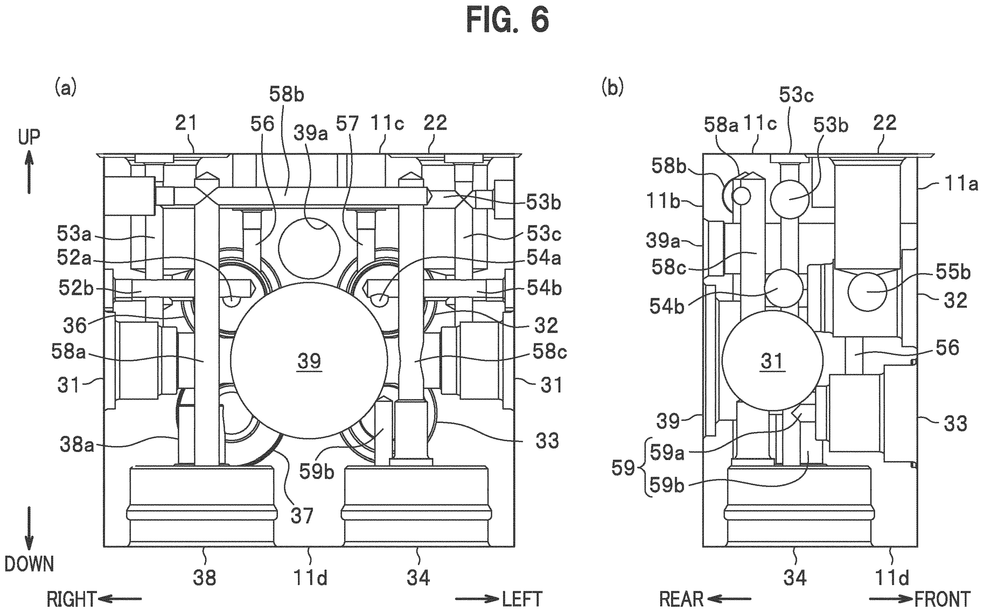

Such an inlet valve 2 is mounted in an inlet valve mounting hole 32 provided on a left upper portion of the front surface 11a of the base body 100 as illustrated in Fig. 3(b) and Fig. 5(a). The inlet valve mounting hole 32 is formed at positions on an upper side of the pump axis Y1 of the left pump mounting hole 31 (see Fig. 6(b)) in a left area of the two left and right halves divided by the reference plane X1 as illustrated in Fig. 3(b). The inlet valve mounting hole 32 is formed on the same side as the outlet port 22 of the upper surface 11c of the base body 100.

Returning back to Fig. 2, the check valve 2a is connected to the inlet valve 2 in parallel. The check valve 2a is a valve configured to allow only a flow of the brake fluid from the wheel brake R toward the master cylinder **M.** The check valve 2a allows the inflow of the brake fluid from the wheel brake R side toward the master cylinder M even when the inlet valve 2 is closed in a case where an input of the brake pedal BP is released. The check valve 2a is integrally provided with the normally-opened solenoid valve which constitutes the inlet valve 2.

The outlet valve 3 is made of the normally-closed solenoid valve. The outlet valve 3 is provided between the wheel brake R and the reservoir 4 (between the wheel hydraulic pressure line B and the release line D). The outlet valve 3 is normally closed but releases the brake hydraulic pressure applied to the wheel brake R to the reservoir 4 by being opened by the control device 400 when a rear wheel is about to be locked.

Such an outlet valve 3 is mounted in an outlet valve mounting hole 33 provided on a left lower portion of the front surface 11a of the base body 100 as illustrated in Fig. 3(b) and Fig. 5(a). The outlet valve mounting hole 33 is formed at positions on a lower side of the pump axis Y1 of the left pump mounting hole 31 (see Fig. 6(b)) in a left area of the two left and right halves divided by the reference plane X1 as illustrated in Fig. 3(b). The outlet valve mounting hole 33 is provided on the same side as the inlet valve mounting hole 32 in the vertical direction of the base body 100.

Returning back to Fig. 2, the reservoir 4 has a function of temporarily storing the brake fluid released by opening the outlet valve 3.

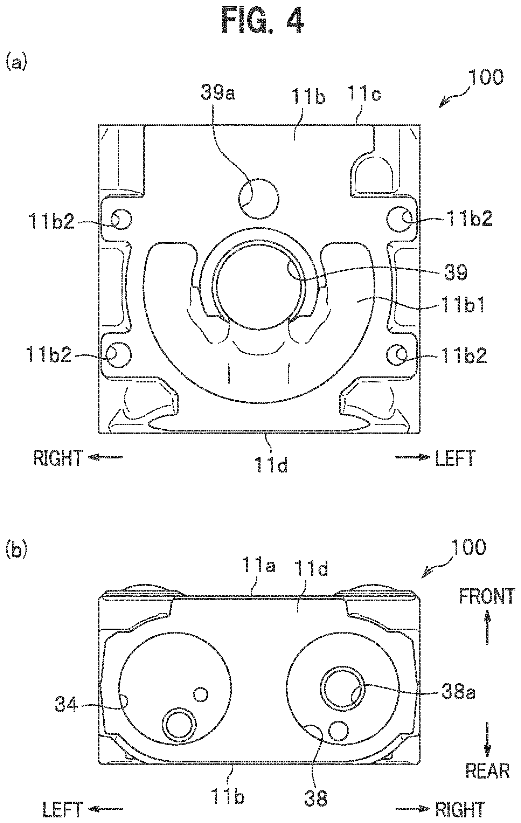

The reservoir 4 is mounted in a reservoir mounting hole 34 illustrated in Fig. 4(b). The reservoir mounting hole 34 is opening on the left area of a lower surface 11d of the base body 100. In other words, the reservoir 4 is provided in the left lower portion of the base body 100.

The pumps 5a, 5b are arranged in lateral symmetry with respect to the reference plane X1 (see Fig. 3(b)). The pumps 5a, 5b are plunger pumps driven by the electric motor 200. The pumps 5a, 5b are each provided with a plunger, not illustrated, and an intake valve and a discharge valve, not illustrated. One pump 5a is interposed between the intake hydraulic pressure line E and one discharge hydraulic pressure line C, and the other pump 5b is interposed between the intake hydraulic pressure line E and the other discharge hydraulic pressure line C. The pumps 5a, 5b are driven by a rotational force of the electric motor 200.

The pumps 5a, 5b are differentiated in discharge cycle of the brake fluid by half a cycle. In other words, the pumps 5a, 5b are shifted in discharge cycle from each other by half a cycle and are configured to discharge the brake fluid twice to the wheel hydraulic pressure line B while an output shaft of the electric motor 200 makes one turn.

The pumps 5a, 5b suck the brake fluid stored temporarily in the reservoir 4 and discharge the same to the discharge hydraulic pressure lines C, C. The pumps 5a, 5b also suck the brake fluid stored in the master cylinder M, the branch hydraulic pressure line A1, the intake hydraulic pressure line E, and the reservoir 4 and discharge the same to the discharge hydraulic pressure lines C, C when the cut valve 7a is in the valve-closed state and the suction valve 6 is in the valve-opened state. Accordingly, the brake hydraulic pressure generated by an operation of the brake pedal BP may be increased. Furthermore, even in the state in which the brake pedal BP is not operated, the brake hydraulic pressure may be made act on the wheel brake R (pressurization control).

Such pumps 5a, 5b are mounted in the pump mounting holes 31, 31 drilled from a left side surface 11e and a right side surface 11f of the base body 100 as illustrated in Figs. 3(c) (d) and so forth.

### (Configuration of Suction Valve)

The suction valve 6 is a suction valve of a mechanical type and is configured to switch a state of connection between the branch hydraulic pressure line A1 and the intake hydraulic pressure line E from an opened state to a blocked state and vice versa. The suction valve 6 is configured to open by a pressure difference between the brake hydraulic pressure on the master cylinder M side (the branched hydraulic pressure line A1 side) and the brake hydraulic pressure on the intake port side (the intake hydraulic pressure line E side) of the pumps 5a, 5b, at which a vacuum is created by the operation of the pumps 5a, 5b.

The suction valve 6 is mounted in a suction valve mounting hole 38 illustrated in Fig. 4(b), Fig. 5(a) and so forth. The suction valve mounting hole 38 is opened on the right area of the lower surface 11d of the base body 100. In other words, the suction valve 6 is provided in a right lower portion of the base body 100.

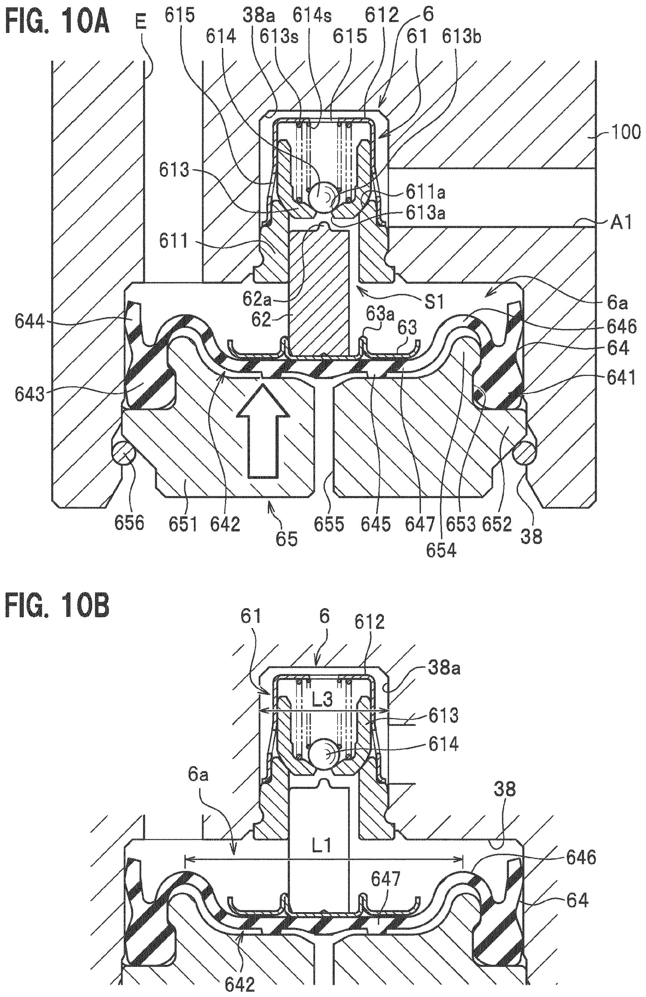

The suction valve 6 includes a normally-closed one-way valve 61, a plunger 62, a plunger plate 63, a diaphragm 64, and a lid member 65 as a plug for fixing the diaphragm 64 as illustrated in Fig. 10A. The one-way valve 61 is a valve to be mounted in the one-way valve mounting hole 38a as an accommodating part formed in a bottom portion of the suction valve mounting hole 38 of the base body 100. The one-way valve mounting hole 38a is smaller in diameter than the suction valve mounting hole 38. The branch hydraulic pressure line A1 communicates with the one-way valve mounting hole 38a.

The one-way valve 61 includes an annular fixed portion 611, a retainer 612 to be fixed to an upper end portion of the fixed portion 611, a large diameter valve 613 disposed in the retainer 612, and a spherical small diameter valve 614 disposed inside the large diameter valve 613. The fixed portion 611 is fixedly swaged on an inner wall of an opening of the one-way valve mounting hole 38a. An annular valve seat 611a on which the large diameter valve 613 is to be seated is formed on the upper end portion of the fixed portion 611. The valve seat 611a is formed into a tapered shape in cross section.

The retainer 612 has a substantially hat shape in cross section. The large diameter valve 613 and the small diameter valve 614 are accommodated in an interior of the retainer 612. A lower end portion of the retainer 612 is fitted on an upper end of an outer peripheral wall of the fixed portion 611. The retainer 612 includes an insertion hole 615 to allow conduction of the brake fluid on a peripheral wall and a bottom portion thereof.

The large diameter valve 613 has a recessed shape in cross-section. The small diameter valve 614 is accommodated inside the large diameter valve 613. An outer peripheral surface of a bottom portion of the large diameter valve 613 is formed into a tapered shape or an arcuate shape in cross section corresponding to the valve seat 611a of the fixed portion 611. The large diameter valve 613 is biased in a seating direction by a coil-shaped valve spring 613s provided in a compressed state between the large diameter valve 613 and the bottom portion of the retainer 612 and is seated on the valve seat 611a. An insertion hole 613a is formed in the bottom portion of the large diameter valve 613. The insertion hole 613a is formed into a size which allows insertion of a protrusion 62a of the plunger 62.

An annular valve seat 613b is formed at an opening edge portion on an upper side of the insertion hole 613a. The valve seat 613b is formed into a tapered shape in cross section and allows the small diameter valve 614 to be seated.

The small diameter valve 614 is biased in the seating direction by a coil-shaped valve spring 614s provided in a compressed state between the small diameter valve 614 and the bottom portion of the retainer 612 and is seated on the valve seat 613b. The valve spring 614s is smaller than the valve spring 613s in diameter.

The plunger 62 is a column shaped member. An upper portion of the plunger 62 is inserted inside the fixed portion 611 of the one-way valve 61. The plunger 62 has a substantially triangular shape in cross section in a direction orthogonal to an axial direction. Accordingly, a space S1 is formed between an outer surface of the plunger 62 and an inner surface of the fixed portion 611 of the one-way valve 61. The space S1 serves as a conduction flow path for the brake fluid.

The protrusion 62a protruding upward is formed on an upper end surface of the plunger 62. The protrusion 62a is formed at a position corresponding to the insertion hole 613a of the bottom portion of the large diameter valve 613. The protrusion 62a is inserted into the insertion hole 613a when the plunger 62 described later moves upward and presses the small diameter valve 614 seated on the valve seat 613b upward. Accordingly, the small diameter valve 614 moves away from the valve seat 613b.

An upper surface of the plunger 62 is formed into a flat shape other than the protrusion 62a and thus can come into contact with the lower surface of the bottom portion of the large diameter valve 613. The upper surface of the plunger 62 comes into contact with the lower surface of the bottom portion of the large diameter valve 613 and presses the large diameter valve 613 upward when the plunger 62 described later moves upward. The large diameter valve 613 moves away from the valve seat 611a by being pushed in this manner. Note that a groove or a recess which allows smooth conduction of the brake fluid may be formed on the upper surface of the plunger 62 or the lower end surface of the large diameter valve 613.

The plunger 62 is fixed in a state of being erected on an upper surface of the plunger plate 63.

The plunger plate 63 has a disk shape. The plunger plate 63 is placed at a center portion of the upper surface of the diaphragm 64. An annular rib 63a in which the lower portion of the plunger 62 is fitted and held is formed on the upper surface of the plunger plate 63. An outer peripheral edge portion of the plunger plate 63 rises upward in an arcuate shape in cross section.

The diaphragm 64 includes an annular seal portion 641 in tight contact with an inner peripheral surface of the suction valve mounting hole 38, and a thin film drive unit 642 continuing radially inward of the seal portion 641 and pushes the plunger 62.

The seal portion 641 includes a first seal portion 643, and an annular cup seal portion 644 continuing from the first seal portion 643 and extending upward so as to be opposite side from an opening of the suction valve mounting hole 38.

The first seal portion 643 includes a thickness in the radial direction and formed into an annular shape and is tightly fitted to an inner peripheral surface of the suction valve mounting hole 38 on the opening side to seal to avoid suction of air from outside due to a vacuum created when the pump is operated. The cup seal portion 644 has a substantially cup shape in cross section and is tightly adhered to the inner peripheral surface of the suction valve mounting hole 38 on the opposite side from the opening to seal. The cup seal portion 644 is configured to prevent the brake fluid from leaking out when receiving the brake fluid on the master cylinder M side, for example, in a case where the suction valve 6 is immobilized in the opened state.

The thin film drive unit 642 includes a rising portion 646 formed to be thinner than the seal portion 641 and extending in an arcuate shape radially inward from the seal portion 641, and a flat portion 647 continuing radially inward of the rising portion 646. When a vacuum is created in a vacuum chamber 6a partitioned by the diaphragm 64, the rising portion 646 is subject to elastic deformation and moved so that the flat portion 647 rises toward the one-way valve 61. An annular rib 645 is formed on a lower surface of the flat portion 647 for preventing tight contact of the flat portion 647 to an upper surface of the lid member 65.

An effective diameter L1 of the diaphragm 64 is set to be larger than an inner diameter L3 of the one-way valve mounting hole 38a as illustrated in Fig. 10B. In other words, the effective diameter L1 is always larger than the outer diameter of the large diameter valve 613 disposed in the one-way valve mounting hole 38a, whereby a pressure-receiving surface area of the effective diameter L1 portion of the diaphragm 64 is set to be larger than the pressure-receiving surface area of the large diameter valve 613 as a matter of necessity. With such dimensions, even when the brake hydraulic pressure on the master cylinder M side is high when pressurized by the pumps with the brake pedal BP operated, opening of the suction valve 6 is ensured.

The lid member 65 is a member to be inserted inside the opening of the suction valve mounting hole 38 to fix the diaphragm 64 in the suction valve mounting hole 38 (in the base body 100). The lid member 65 is provided with a base portion 651, a fitting portion 652, a retaining portion 653, a lip portion 654, and an atmosphere communicating hole 655.

The fitting portion 652 has a flange shape extending radially outward and is fitted into the inner peripheral surface of the suction valve mounting hole 38. An engagement ring 656 for retention is engaged with the fitting portion 652 from axially outside. The retaining portion 653 is formed by using an upper surface of the fitting portion 652. The first seal portion 643 of the diaphragm 64 is fitted on the retaining portion 653. The lip portion 654 continues to the retaining portion 653 and protrudes upward from the retaining portion 653. An upper end portion of the lip portion 654 has an arcuate shape. The lip portion 654 is positioned downward of the rising portion 646 of the diaphragm 64. The lip portion 654 is positioned downward of the rising portion 646 to prevent deformation of the diaphragm 64 more than necessary when the brake hydraulic pressure from the master cylinder M side acts on the vacuum chamber 6a, for example, in a case where the suction valve 6 is immobilized in an opened state.

Returning back to Fig. 2, a check valve 8 is provided in the intake hydraulic pressure line E. The check valve 8 is a one-way valve configured to allow a flow of the brake fluid from the reservoir 4 side toward the pumps 5a, 5b.

A hydraulic pressure sensor 9 is disposed in the output hydraulic pressure line A. The hydraulic pressure sensor 9 is configured to measure a magnitude of the brake hydraulic pressure of the output hydraulic pressure line A, that is, the brake fluid pressure in the master cylinder M.

A value of the brake hydraulic pressure measured by the hydraulic pressure sensor 9 is retrieved as needed by the control device 400 to determine whether or not the brake fluid pressure is output from the master cylinder M by the control device 400, that is, whether or not the brake pedal BP is pressed. Further, the pressurization control or the like is performed based on the magnitude of the brake hydraulic pressure measured by the hydraulic pressure sensor 9.

The electric motor 200 is a common power source of the two pumps 5a, 5b, and is operated based on a command from the control device 400. The electric motor 200 is attached by inserting a motor shaft, not illustrated, into a motor shaft insertion hole 39 having a circular recessed shape of the rear surface (the other surface) 11b of the base body 100 as illustrated in Fig. 4(a).

The control device 400 (see Fig. 1) controls opening and closing of the cut valve 7a of the regulator 7, the inlet valve 2 and the outlet valve 3 as well as the operation of the electric motor 200 based on output from the hydraulic pressure sensor 9, a wheel speed sensor, not illustrated, an acceleration sensor, and a yaw rate sensor for measuring the movement of a vehicle body, and external sensors such as a radar camera.

Next, referring to the hydraulic pressure circuit U1 illustrated in Fig. 2, normal braking, anti-locking braking control, and the pressurization control realized by the control device 400 will be described.

Note that a hydraulic pressure line indicated by a thick dash-dot-dash line in the description of the hydraulic pressure circuit U1 is a portion where the operating fluid boosted by the master cylinder M is acting on. In the same manner, a hydraulic pressure line indicated by a thick solid line is a portion where the boosted operating fluid is acting on, and a hydraulic pressure line indicated by a thick broken line is a portion where the operation fluid is sucked by the pump 5 and a vacuum is created.

### (Normal Braking)

During normal braking in which the respective wheels have no probability of being locked, a plurality of electromagnetic coils for driving the above-described plurality of solenoid valves are demagnetized by the control device 400. In other words, in the normal braking, the cut valve 7a and the inlet valve 2 are in the valve-opened state, and the outlet valve 3 is in the valve-closed state. The one-way valve 61 of the suction valve 6 is in the valve-closed state.

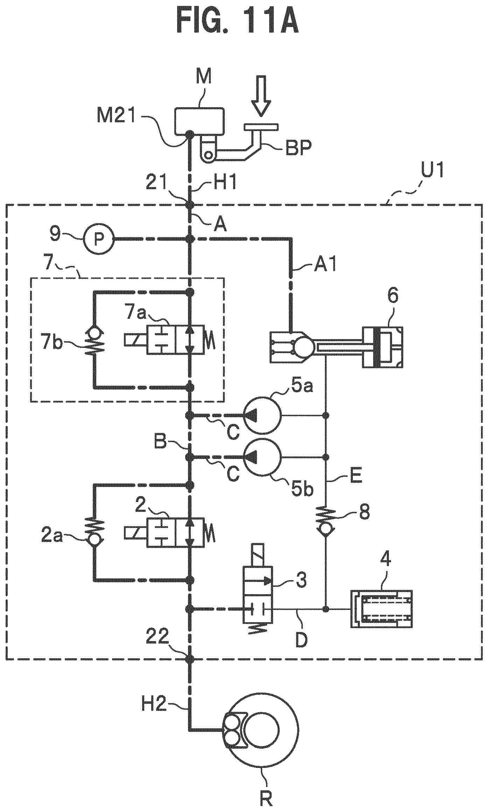

When the driver's foot presses the brake pedal BP in such a state, the brake hydraulic pressure caused by the pressing force of the foot is transmitted as-is to the wheel brake R, so that a brake is applied to the wheel as illustrated in Fig. 11A.

In this case, the brake hydraulic pressure from the master cylinder M acts on the suction valve 6 via the branch hydraulic pressure line A1. Accordingly, the large diameter valve 613 and the small diameter valve 614 of the one-way valve 61 (see Fig. 10A, the same applies hereinafter) receive the brake hydraulic pressure and are seated respectively, so that the valve-closed state is maintained. In other words, the brake hydraulic pressure from the master cylinder M does not act on the intake hydraulic pressure line E side.

### (Anti-Locking Braking Control)

The anti-locking braking control is executed when the wheel is about to be brought into a locked state, and is achieved by selecting one of pressure-decreasing, pressure-increasing or maintaining constant the brake hydraulic pressure acting on the wheel brake R as needed. Note that which one of pressure-decreasing, pressure-increasing, or maintaining is to be selected is determined by the control device 400 based on the wheel speed obtained from a wheel speed sensor, not illustrated.

If the wheel is about to be brought into the locked state while pressing the brake pedal BP, the anti-locking braking control is started by the control device 400.

In the pressure-decreasing control, the inlet valve 2 is brought into the valve-closed state by the control device 400, and the outlet valve 3 is brought into the valve-opened state. In this configuration, the brake fluid of the wheel hydraulic pressure line B communicating with the wheel brake R flows into the reservoir 4 through the release line D. Consequently, the brake hydraulic pressure acting on the wheel brake R is decreased.

Note that, when the anti-locking braking control is executed, the electric motor 200 is driven by the control device 400 to actuate the pumps 5a, 5b, and the brake fluid stored in the reservoir 4 is flowed back toward the wheel hydraulic pressure line B via the discharge hydraulic pressure line C.

In the control of maintaining constant, the inlet valve 2 and the outlet valve 3 are brought into the valve-closed state by the control device 400. In this configuration, the brake fluid is enclosed in the flow path closed by the inlet valve 2 and the outlet valve 3. Consequently, the brake hydraulic pressure acting on the wheel brake R is maintained constant.

In pressure-increasing control, the inlet valve 2 is brought into the valve-opened state and the outlet valve 3 is brought into the valve-closed state by the control device 400. In this configuration, the brake hydraulic pressure caused by the pressing force of the brake pedal BP acts directly on the wheel brake R. Consequently, the brake hydraulic pressure acting on the wheel brake R is increased.

### (Pressurization Control)

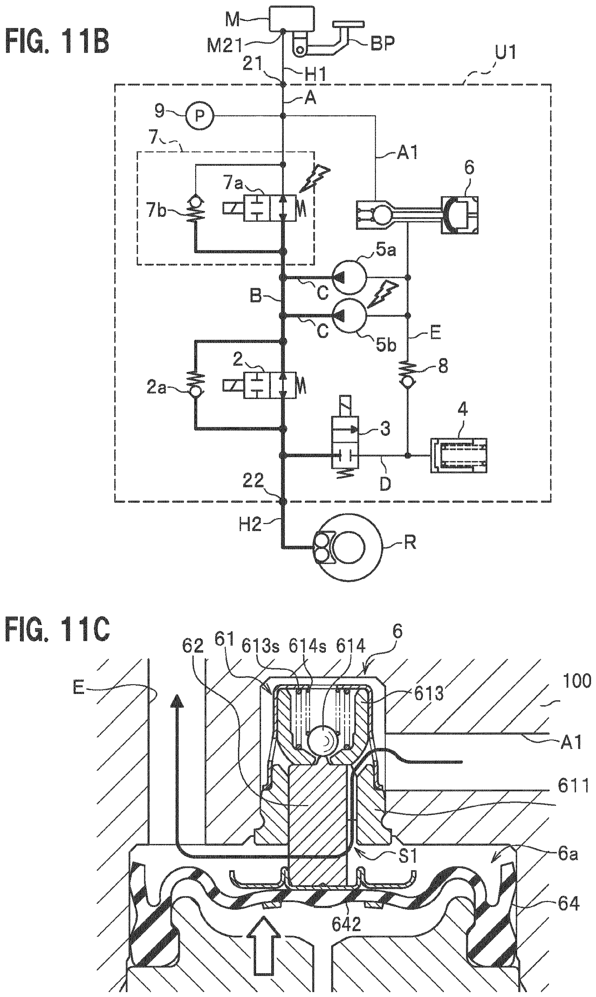

When applying a brake to the wheel by the control device 400 is determined to be necessary in a non-operation state in which the brake pedal BP is not operated, the control device 400 energizes the cut valve 7a to bring the same to the valve-closed state, and drives the pumps 5a, 5b as illustrated in Fig. 11B.

When the pumps 5a, 5b are driven, the brake fluid in the intake hydraulic pressure line E is sucked by the pumps 5a, 5b, and a vacuum is created in the intake hydraulic pressure line E. Accordingly, a vacuum is created in the vacuum chamber 6a (see Fig. 10A) of the suction valve 6 that communicates with the intake hydraulic pressure line E, and the vacuum causes elastic deformation of the thin film drive unit 642 of the diaphragm 64 toward the one-way valve 61. The elastic deformation makes the upper surface of the plunger 62 come into contact with the lower surface of the large diameter valve 613 and pushes the large diameter valve 613 upward.

Accordingly, as illustrated in Fig. 11C, the large diameter valve 613 moves away from the annular valve seat 611a, and the branch hydraulic pressure line A1 communicates with the vacuum chamber 6a through the space S1 of the plunger 62. This communication causes the brake fluid on the master cylinder M side to flow into the vacuum chamber 6a from the branch hydraulic pressure line A1 through the one-way valve 61, and further, flows from the vacuum chamber 6a into the intake hydraulic pressure line E and is sucked by the pumps 5a, 5b.

The brake fluid pressurized by the pumps 5a, 5b is discharged from the pumps 5a, 5b to the wheel hydraulic pressure line B as illustrated in Fig. 11B and acts on the wheel brake R. Accordingly, a brake is applied to the wheel.

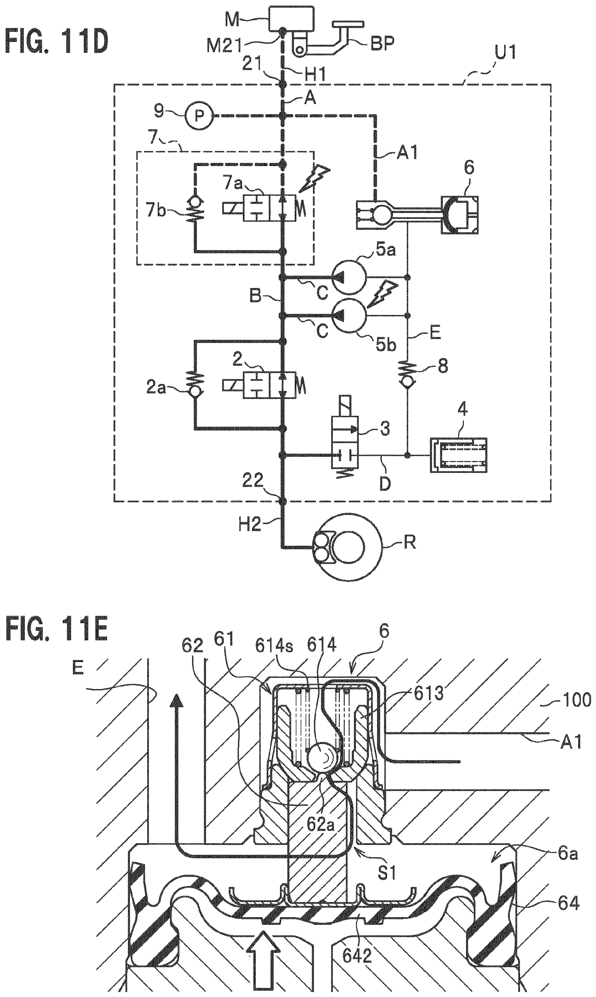

Next, an operation when application of brake to the wheel by the control device 400 is determined to be necessary when in the operating state in which the brake pedal BP is operated will be described. In this case as well, as illustrated in Fig. 11D, the control device 400 energizes the cut valve 7a and brings the same into the valve-closed state and drives the pumps 5a, 5b.

When the pumps 5a, 5b are driven, the brake fluid in the intake hydraulic pressure line E is sucked by the pumps 5a, 5b, and a vacuum is created in the intake hydraulic pressure line E in the same manner as described above. Accordingly, a vacuum is created in the vacuum chamber 6a of the suction valve 6 that communicates with the intake hydraulic pressure line E, and the vacuum causes elastic deformation of the thin film drive unit 642 of the diaphragm 64 toward the one-way valve 61, and the protrusion 62a on the upper surface of the plunger 62 comes into contact with the small diameter valve 614. In this case, a pressing force of the brake hydraulic pressure on the master cylinder M side caused by a pressing force of the driver's foot and a biasing force of the valve spring 614s act on the small diameter valve 614. Therefore, when a force of the plunger 62 pushing the small diameter valve 614 upward exceeds a resultant force of the pressing force and the biasing force acting on the small diameter valve 614, the small diameter valve 614 moves away from the valve seat 613b. In other words, the small diameter valve 614 is opened by a difference force between the push-up force and the resultant force.

When the small diameter valve 614 moves away from the seat, the branch hydraulic pressure line A1 communicates with the vacuum chamber 6a through the space formed by separation and the space S1 of the plunger 62 as illustrated in Fig. 11E. This communication causes the brake fluid on the master cylinder M side to flow into the vacuum chamber 6a from the branch hydraulic pressure line A1 through the one-way valve 61, and further, flows from the vacuum chamber 6a into the intake hydraulic pressure line E and is sucked by the pumps 5a, 5b.

At this time, when the brake fluid on the master cylinder M side flows into the vacuum chamber 6a, the brake hydraulic pressure on the master cylinder M side acts on the diaphragm 64, and the thin film drive unit 642 moves back toward the lid member 65. Accordingly, a force of the plunger 62 pushing the small diameter valve 614 upward disappears and thus the small diameter valve 614 is seated on the valve seat 613b.

During the operation of the pumps 5a, 5b, the actions described above are repeatedly performed. In other words, opening and closing of the small diameter valve 614 are repeatedly performed and the brake fluid pressurized by the pumps 5a, 5b acts on the wheel brake R. Accordingly, a brake is applied to the wheel.

When the pressurization control and the like as described above is performed, pulsation of the brake fluid discharged from the pumps 5a, 5b is desirably damped by the cooperation of the two pumps 5a, 5b.

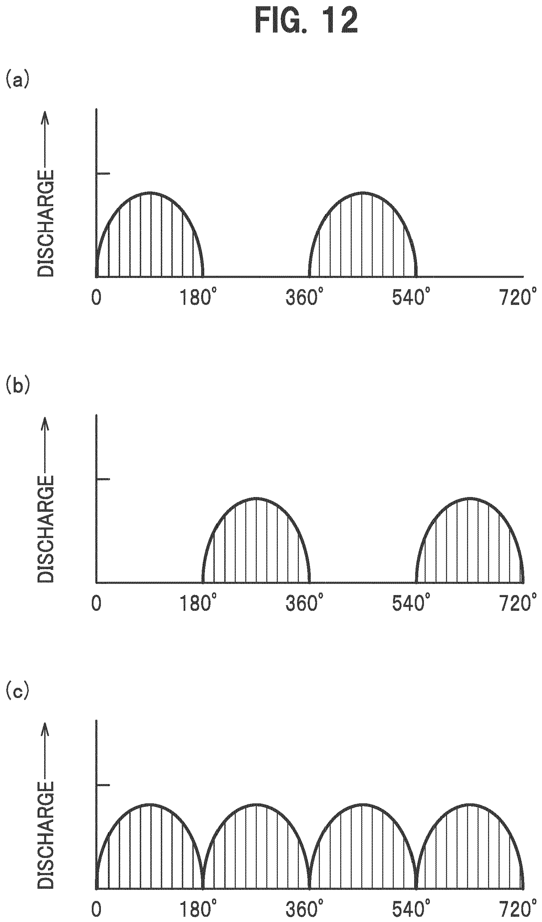

Specifically, discharge of the pump 5a alone may be expressed by non-continuous two mountain curves as illustrated in Fig. 12(a). In contrast, discharge of the pump 5b alone is performed at a phase of 180 degrees shifted from the discharge of the pump 5a by half a cycle and may be expressed by non-continuous two mountain curves as illustrated in Fig. 12(b). Therefore, combined discharge from the two pumps 5a, 5b is expressed by four continuous mountain curves as illustrated in Fig. 12(c).

Accordingly, in the present embodiment, an effect of alleviation of discharge pulsation is achieved compared with the case where discharge is performed by the single pump 5a, for example.

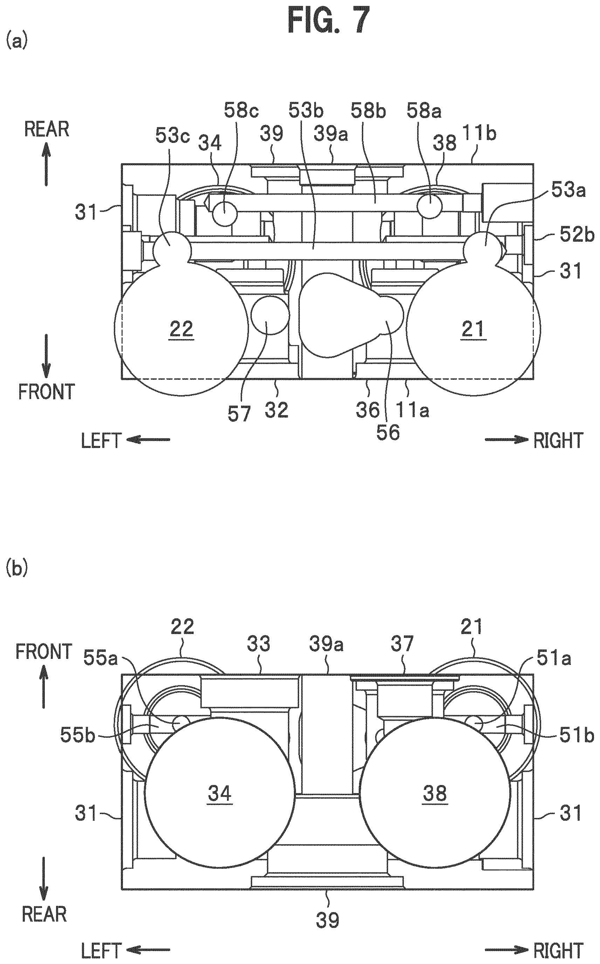

Referring now to Fig. 1 and Fig. 3 to Fig. 9, specific structure of the brake hydraulic pressure control device U will be described in detail.

The brake hydraulic pressure control device U includes the base body 100, the electric motor 200, the control housing 300, and the control device 400 (see Fig. 1) as described above.

The base body 100 is made of an extruded material or a cast product of aluminum alloy having a substantially cubic shape. The front surface 11a of the base body 100 is formed into a substantially flat plane without any depressions and projections. The base body 100 is provided with a flow path component which constitutes one brake output system (see Fig. 2).

Referring to Figs. 3(a) to (d), Figs. 4(a), (b) as needed for description, a flow path component includes a plurality of mounting holes opening on the front surface 11a, and the motor shaft insertion hole 39 opening on the rear surface 11b. The flow path component further includes the inlet port 21 and the outlet port 22 opening on the upper surface 11c as well as the pump mounting holes 31, 31, opening on the left side surface 11e and the right side surface 11f.

The inlet valve mounting hole 32, the outlet valve mounting hole 33, the cut valve mounting hole 36, and a sensor mounting hole 37 are formed as mounting holes in the front surface 11a of the base body 100. The inlet valve mounting hole 32 is provided in the left area of the reference plane X1 on an upper side of the base body 100 with respect to the pump axis Y1 of the pump mounting holes 31. The outlet valve mounting hole 33 is provided in the left area of the reference plane X1 on a lower side of the base body 100 with respect to the pump axis Y1 of the pump mounting holes 31.

The cut valve mounting hole 36 is provided in the right area of the reference plane X1 on an upper side of the base body 100 with respect to the pump axis Y1 of the pump mounting holes 31. The inlet valve mounting hole 32 and the cut valve mounting hole 36 are provided at positioned in symmetry with respect to the reference plane X1.

Note that the inlet valve mounting hole 32, the outlet valve mounting hole 33, and the cut valve mounting hole 36 all have the same diameter.

The inlet valve 2 is mounted in the inlet valve mounting hole 32, and the outlet valve 3 is mounted in the outlet valve mounting hole 33. The cut valve 7a is mounted in the cut valve mounting hole 36.

The sensor mounting hole 37 is provided in the right area of the reference plane X1 on the lower side of the base body 100 in a state of partly overlapping with the pump axis Y1 of the pump mounting holes 31. Note that the center position of the sensor mounting hole 37 and the center position of the outlet valve mounting hole 33 are positioned in symmetry with respect to the reference plane X1.

The motor shaft insertion hole 39 is formed at a center portion of the rear surface 11b of the base body 100. Further, around the motor shaft insertion hole 39, a recess 11b1 formed to be deeper than the rear surface 11b and having a U-shape in rear view is formed. A front cover of the housing of the electric motor 200 (see Fig. 1, the same applies hereinafter) is mounted in the recess 11b1. The electric motor 200 is attached to a mounting hole 11b2 (see Fig. 4(a)) provided in the rear surface 11b with a mounting screw (not illustrated). A seal member is interposed between the electric motor 200 and the rear surface 11b.

The rear surface 11b is provided with a hole portion 39a opening for inserting a bus bar (not illustrated) of the electric motor 200 at a position upward of the motor shaft insertion hole 39. The hole portion 39a penetrates in the fore-and-aft direction through the base body 100 and opening on the front surface 11a so as to intersect the reference plane X1.

The inlet port 21 and the outlet port 22 are formed so as to depress in the upper surface 11c of the base body 100. The inlet port 21 is provided at a positional relationship corresponding to the cut valve mounting hole 36 as illustrated in Figs. 3(a) (b). The outlet port 22 is provided at a positional relationship corresponding to the inlet valve mounting hole 32. The pipe H1 (see Fig. 2) from the master cylinder M is connected to the inlet port 21. The pipe H2 (see Fig. 2) extending to the wheel brake R is connected to the outlet port 22.

A blank space in which the inlet port 21 or the like is not formed is formed in left and right areas of the upper surface 11c of the base body 100 on the rear side as illustrated in Fig. 3(a). In other words, the upper surface 11c of the base body 100 includes a blank space where the inlet port 21 or the like can be formed.

The reservoir mounting hole 34 for mounting the reservoir 4 is formed so as to be recessed in the left area of the lower surface 11d of the base body 100 as illustrated in Fig. 4(b). The suction valve mounting hole 38 for mounting the suction valve 6 is formed so as to be recessed in the right area of the lower surface 11d of the base body 100. The reservoir mounting hole 34 and the suction valve mounting hole 38 has the same diameter.

The pump mounting hole 31 for mounting the pump 5a is formed so as to be recessed in the left side surface 11e of the base body 100 as illustrated in Fig. 3(c). The pump mounting hole 31 for mounting the pump 5b is formed so as to be recessed in the right side surface 11f of the base body 100 as illustrated in Fig. 3(d). In the pump mounting holes 31, 31, the pumps 5a, 5b engages cam members, not illustrated, provided on an output shaft of the electric motor 200.

In the control housing 300 (see Fig. 1), an electromagnetic coil to be connected to the control device 400, not illustrated, is provided. The electromagnetic coil is attached to the inlet valve 2, the outlet valve 3, and the cut valve 7a protruding from the base body 100. The control housing 300 is integrally secured to the front surface 11a of the base body 100 in a state of covering the inlet valve 2, the outlet valve 3, the cut valve 7a, the hydraulic pressure sensor 9, and the bus bar.

The flow path of the flow path component provided on the base body 100 will now be described in detail. Note that, when describing the front surface 11a, the rear surface 11b, the upper surface 11c, the lower surface 11d, the left side surface 11e, and the right side surface 11f of the flow path component (base body 100), respective drawings in Fig. 3 and respective drawings in Fig. 4 are to be referred to.

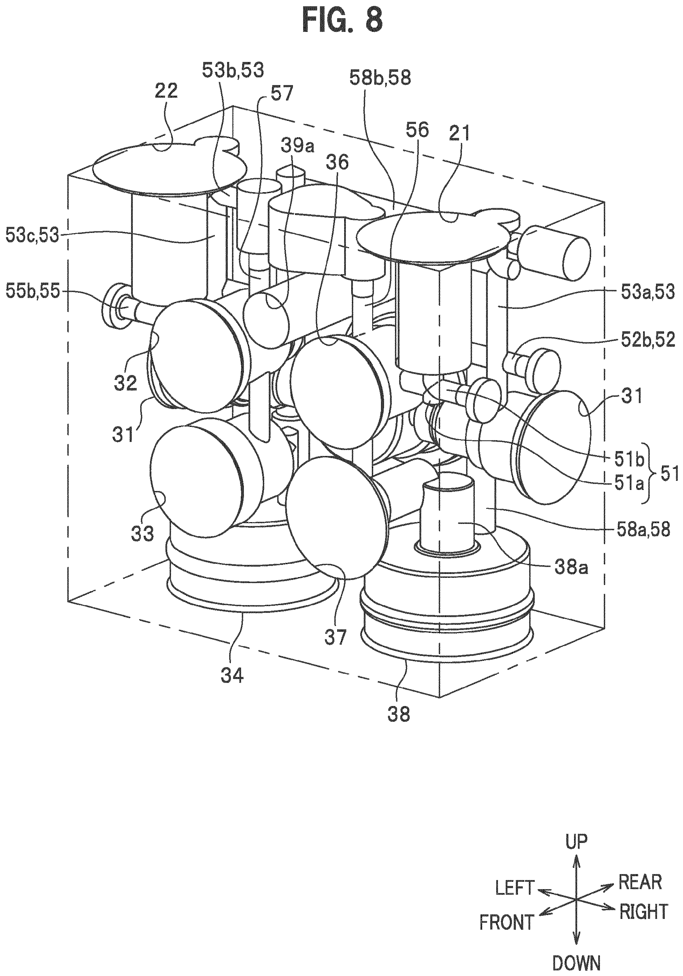

As illustrated in Figs. 5 (a), (b), Fig. 8, and Fig. 9, the inlet port 21 is a bottomed cylindrical hole, and communicates with the cut valve mounting hole 36 via a first flow path 51 (see Fig. 8). The first flow path 51 includes a vertical hole 51a drilled from a bottom portion of the inlet port 21 toward the lower surface 11d of the base body 100, and a lateral hole 51b drilled from the right side surface 11f of the base body 100 toward the cut valve mounting hole 36. The lateral hole 51b intersects with the vertical hole 51a at the intermediate portion thereof. The left end portion of the lateral hole 51b reaches a side portion of the cut valve mounting hole 36. Here, the flow path extending from the bottom portion of the inlet port 21 through the first flow path 51 to the side portion of the cut valve mounting hole 36 corresponds to the output hydraulic pressure line A illustrated in Fig. 2.

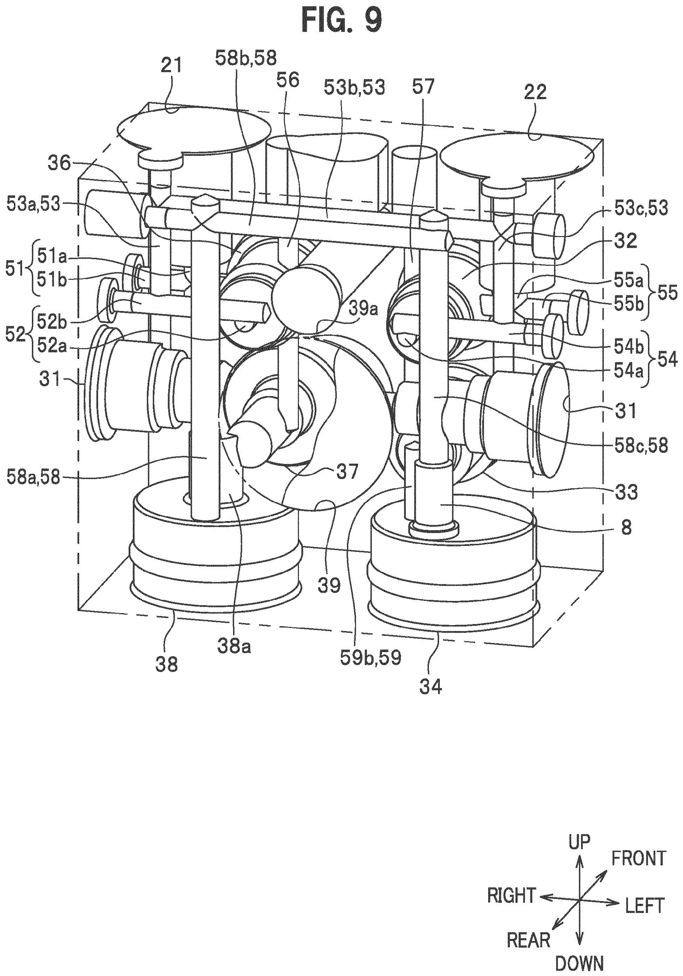

The cut valve mounting hole 36 is a bottomed and shouldered cylindrical hole. The cut valve mounting hole 36 communicates with the inlet valve mounting hole 32 through a second flow path 52, a third flow path 53, and a fourth flow path 54 as illustrated in Fig. 9. The second flow path 52 includes a lateral hole 52a drilled from a bottom portion of the cut valve mounting hole 36 toward the rear surface 11b of the base body 100 and a lateral hole 52b drilled from the right side surface 11f of the base body100 toward the left side surface 11e. The left end portion of the lateral hole 52b communicates with a rear end portion of the lateral hole 52a.

The third flow path 53 includes a vertical hole 53a, a lateral hole 53b, and a vertical hole 53c. The vertical hole 53a, the lateral hole 53b, and the vertical hole 53c form a flow path of an inverted angular U shape (the inverted recessed shape) extending between left and right of the base body 100 in rear view.

The vertical hole 53a is drilled from the upper surface 11c of the base body 100 in the right area toward the lower surface 11d. A lower end portion of the vertical hole 53a extends up to the side portion of the right pump mounting hole 31**.** A lower portion of the vertical hole 53a intersects with the lateral hole 52b of the second flow path 52**.**

The lateral hole 53b is drilled from the left side surface 11e of the base body 100 toward the right side surface 11f. A right end portion of the lateral hole 53b intersects with an upper portion of the vertical hole 53a.

The vertical hole 53c is drilled from the upper surface 11c of the base body 100 in the left area toward the lower surface 11d**.** A lower end portion of the vertical hole 53c extends up to the side portion of the left pump mounting hole 31**.** An upper portion of the vertical hole 53c communicates with the left end portion of the lateral hole **53b.**

The fourth flow path 54 includes a lateral hole 54a drilled from a bottom portion of the inlet valve mounting hole 32 toward the rear surface 11b of the base body 100 and a lateral hole 54b drilled from the left side surface 11e of the base body 100 toward the right side surface 11f. A right end portion of the lateral hole 54b communicates with a rear end portion of the lateral hole 54a.

The outlet port 22 is a bottomed cylindrical hole and communicates with the inlet valve mounting hole 32 via a fifth flow path 55 (see Fig. 5(a)). The fifth flow path 55 includes a vertical hole 55a drilled from a bottom portion of the outlet port 22 toward the lower surface 11d of the base body 100, and a lateral hole 55b drilled from the left side surface 11e of the base body 100 toward the inlet valve mounting hole 32. The lateral hole 55b intersects with the vertical hole 55a at an intermediate portion thereof. The right end portion of the lateral hole 55b reaches a side portion of the inlet valve mounting hole 32. The inlet valve mounting hole 32 is a bottomed and shouldered cylindrical hole.

Here, the flow path extending up to the inlet valve mounting hole 32 through the second flow path 52, the third flow path 53, and the fourth flow path 54, and further reaches the outlet port 22 through the fifth flow path 55 corresponds to the wheel hydraulic pressure line B illustrated in Fig. 2. Also, the flow path made of vertical hole 53a and the vertical hole 53c of the third flow path 53 corresponds to the discharge hydraulic pressure lines C, C illustrated in Fig. 2.

A sixth flow path 56 intersects with the side portion of the cut valve mounting hole 36 as illustrated in Fig. 8. The sixth flow path 56 includes a vertical hole drilled from the upper surface 11c of the base body 100 in the right area toward the lower surface 11d. A lower end portion of the sixth flow path 56 extends up to the side portion of the sensor mounting hole 37.

The sensor mounting hole 37 is a bottomed and shouldered cylindrical hole. A bottom portion of the sensor mounting hole 37 is directly connected to the one-way valve mounting hole 38a of the suction valve mounting hole 38 disposed rearward thereof, and the sensor mounting hole 37 communicates with the one-way valve mounting hole 38a via the connected portion as illustrated in Fig. 9.

Here, the flow path formed at the connecting portion between the sensor mounting hole 37 and the one-way valve mounting hole 38a corresponds to the branch hydraulic pressure line A1 illustrated in Fig. 2.

A seventh flow path 57 intersects in the vertical direction with the side portion of the inlet valve mounting hole 32 as illustrated in Fig. 8. The seventh flow path 57 includes a vertical hole drilled from the upper surface 11c of the base body 100 in the left area toward the lower surface 11d. A lower end portion of the seventh flow path 57 extends up to the side portion of the outlet valve mounting hole 33.

The outlet valve mounting hole 33 is a bottomed and shouldered cylindrical hole. The outlet valve mounting hole 33 communicates with the reservoir mounting hole 34 via a ninth flow path 59 as illustrated in Fig. 6(b). The ninth flow path 59 includes a lateral hole 59a drilled from a bottom portion of the outlet valve mounting hole 33 toward the rear surface 11b of the base body 100 and a vertical hole 59b drilled from the bottom surface of the reservoir mounting hole 34 toward the upper surface 11c of the base body 100. An upper end portion of the vertical hole 59b communicates with a rear end portion of the lateral hole 59a. The reservoir mounting hole 34 is a bottomed cylindrical hole.

Here, the flow path extending up to the reservoir mounting hole 34 through the ninth flow path 59 corresponds to the release line D illustrated in Fig. 2.

The suction valve mounting hole 38 is a bottomed cylindrical hole. The suction valve mounting hole 38 and the reservoir mounting hole 34 communicate with each other via an eighth flow path 58 as illustrated in Fig. 9. The eighth flow path 58 includes a vertical hole 58a, a lateral hole 58b, and a vertical hole 58c. The vertical hole 58a, the lateral hole 58b, and the vertical hole 58c form a flow path of an inverted angular U shape (the inverted recessed shape) extending between left and right of the base body 100 in rear view.

The vertical hole 58a is drilled from the bottom surface of the suction valve mounting hole 38 toward the upper surface 11c of the base body 100 in the right area. An intermediate portion of the vertical hole 58a intersects with the side portion of the right pump mounting hole 31, which serves as an intake port. The vertical hole 58a functions as a first pump intake path connecting the suction valve 6 and the one pump 5a.

The vertical hole 58c is drilled from a bottom surface of the reservoir mounting hole 34 toward the upper surface 11c of the base body 100 in the left area. An intermediate portion of the vertical hole 58c intersects with the side portion of the left pump mounting hole 31, which serves as an intake port. The vertical hole 58c functions as a second pump intake path connecting the reservoir 4 and the other pump 5b.

The lateral hole 58b is drilled from the right side surface 11f of the base body 100 toward the left side surface 11e. A right portion of the lateral hole 58b communicates with an upper end portion of the vertical hole 58a, and a left end portion of the lateral hole 58b communicates with an upper end portion of the vertical hole 58c. The lateral hole 58b functions as a third pump intake path for connecting the vertical hole 58a and the vertical hole 58c.

In this configuration, the reservoir 4, the suction valve 6, and respective intake ports of the pumps 5a, 5b are connected by the eighth flow path 58, which functions as a single pump intake path.

Note that the check valve 8 (one-way valve) illustrated in Fig. 2 is mounted on a lower end portion of the vertical hole 58c.

A discharge side of the right pump mounting hole 31 closer to the inlet port 21 communicates with the fourth flow path 54 in the left area via the third flow path 53 and communicates with the inlet valve mounting hole 32 via the fourth flow path 54. The discharge side of the pump mounting hole 31, after having communicated with the inlet valve mounting hole 32, communicates with the outlet port 22 via the fifth flow path 55.

An intake side of the right pump mounting hole 31 communicates with the vacuum chamber 6a of the suction valve mounting hole 38 in the right area via the vertical hole 58a of the eighth flow path 58. Further, the intake side of the right pump mounting hole 31 communicates with the intake side of the left pump mounting hole 31 and the reservoir mounting hole 34 via the eighth flow path 58.

In contrast, the discharge side of the left pump mounting hole 31 closer to the outlet port 22 communicates with the inlet valve mounting hole 32 via the vertical hole 53c of the third flow path 53 and the fourth flow path 54 and, from the inlet valve mounting hole 32, communicates with the outlet port 22 via the fifth flow path 55. Further, the intake side of the left pump mounting hole 31 communicates with the reservoir mounting hole 34 via the vertical hole 58c of the eighth flow path 58. Further, the intake side of the left pump mounting hole 31 communicates with the intake side of the right pump mounting hole 31 and the suction valve mounting hole 38 via the eighth flow path 58.

Subsequently, a flow of the brake fluid when the normal braking, anti-locking braking control, and the pressurization control are performed will be described in detail.

### (Normal Braking)

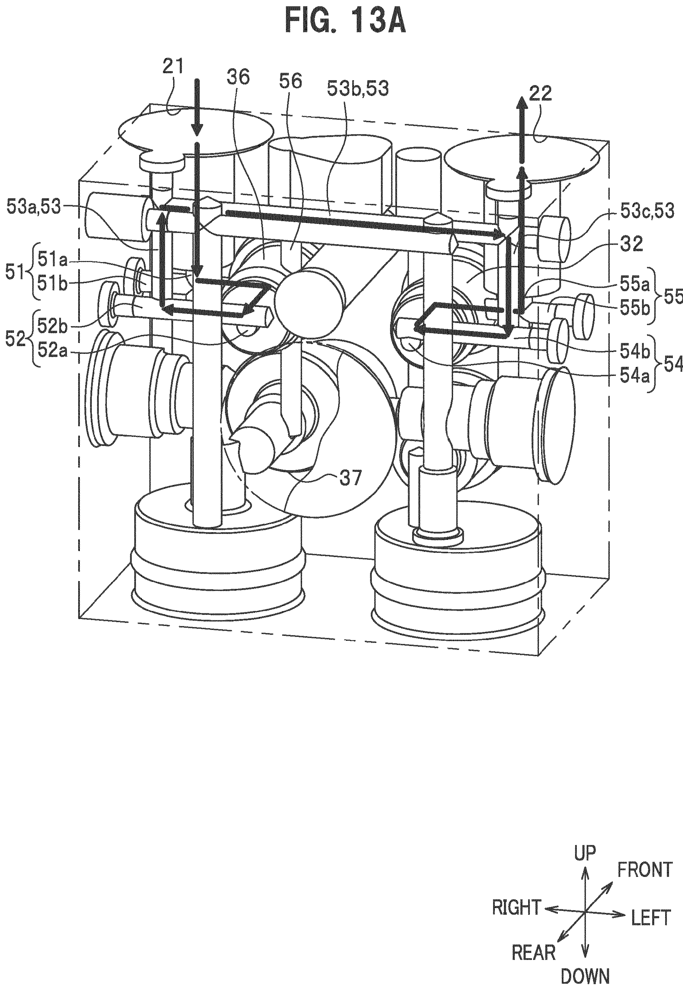

In the normal braking, the suction valve 6 is in the valve-closed state, and the normally-opened solenoid valve, which serves as the cut valve 7a, is in the valve-opened state as described above. Accordingly, as illustrated in Fig. 13A, the brake fluid inflowing from the inlet port 21 flows into the cut valve mounting hole 36 through the first flow path 51 and flows into the second flow path 52 through the interior of the solenoid valve in the valve-opened state. The brake fluid flowed into the second flow path 52 then flows from the second flow path 52 into the inlet valve mounting hole 32 in the left area via the third flow path 53 and the fourth flow path 54.

The brake fluid flowed into the inlet valve mounting hole 32 passes in the interior of the inlet valve 2 in the valve-opened state, flows into the outlet port 22 via the fifth flow path 55, and reaches the wheel brake R through the outlet port 22.

Note that the brake fluid flowed from the inlet port 21 through the first flow path 51 into the cut valve mounting hole 36 flows into the sensor mounting hole 37 through the sixth flow path 56. Then, the brake hydraulic pressure from the master cylinder M is measured by the hydraulic pressure sensor 9, and the measured value is retrieved by the control device 400 as needed.

### (Anti-Locking Braking Control)

Although illustration of arrows indicating the flow of the brake fluid is omitted, when decreasing the brake hydraulic pressure acting on the wheel brake R, for example, by the anti-locking braking control, the inlet valve 2 is brought into the valve-closed state and the outlet valve 3 is brought into the valve-opened state by the control device 400 as described above. Accordingly, the brake fluid acting on the wheel brake R flows into the side portion of the inlet valve mounting hole 32 through the outlet port 22 and the fifth flow path 55.

The brake fluid flowed into the inlet valve mounting hole 32 then flows into the outlet valve mounting hole 33 through the seventh flow path 57 located on a lateral side without flowing into the fourth flow path 54 as the inlet valve 2 is in the valve-closed state.

The brake fluid flowed into the outlet valve mounting hole 33 then flows into the ninth flow path 59 through the interior of the outlet valve 3**,** being in the valve-opened state, and flows into the reservoir mounting hole 34**.** Note that, when executing the anti-locking braking control, the electric motor 200 is driven by the control device 400 and the pumps 5a, 5b are operated. Consequently, the brake fluid stored in the reservoir mounting hole 34 is sucked into the pump mounting holes 31, 31 via the eighth flow path 58 and is discharged into the third flow path 53.

The brake fluid discharged to the third flow path 53 flows through the third flow path 53 from the left area to the right area of the base body 100 and flows into the cut valve mounting hole 36 through the second flow path 52. The brake fluid flowed into the cut valve mounting hole 36 flows into the first flow path 51 through the interior of the cut valve 7a, being in the valve-opened state, and is returned to the master cylinder M side through the inlet port 21.

Next, when maintaining the brake hydraulic pressure acting on the wheel brake R (see Fig. 2) constant by the anti-locking braking control, the inlet valve 2 and the outlet valve 3 are brought into the valve-closed state by the control device 400 as described above, and thus neither inflow of the brake fluid to the fifth flow path 55 nor outflow of the brake fluid from the fifth flow path 55 occurs.

When increasing the brake hydraulic pressure acting on the wheel brake R (see Fig. 2) by the anti-locking braking control, the inlet valve 2 is brought into the valve-opened state and the outlet valve 3 is brought into the valve-closed state by the control device 400 as described above, and thus the flow of the brake fluid becomes the same as the case of the normal brake control.

### (Pressurization Control)

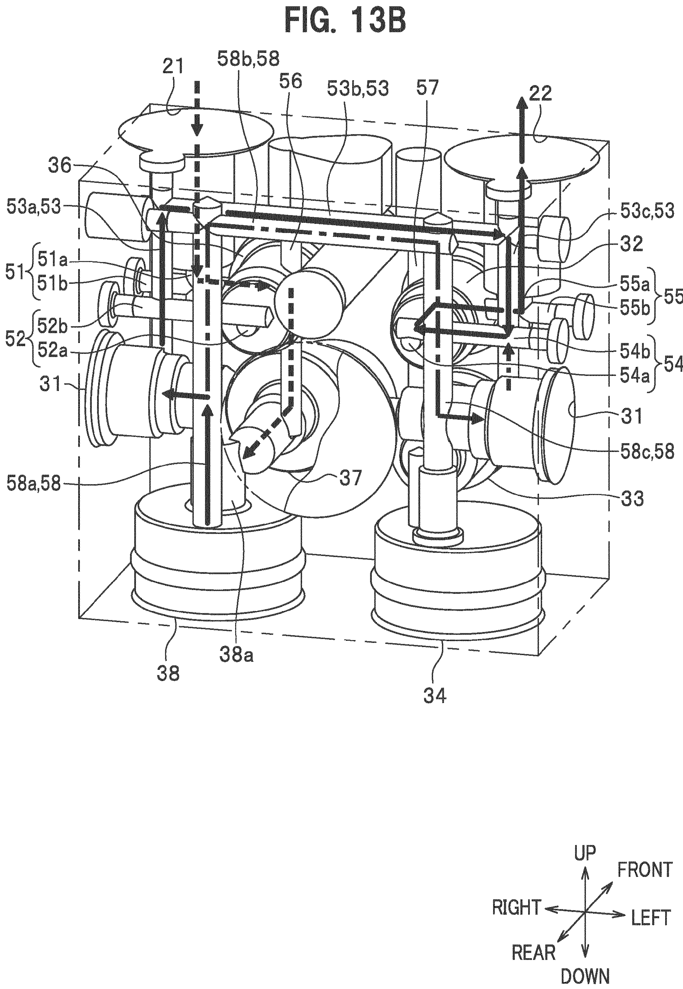

In the pressurization control in the non-operating state in which a brake pedal BP is not operated, the cut valve 7a is brought into the valve-closed state by the control device 400, and the electric motor 200 is actuated to drive the pumps 5a, 5b (see Fig. 2, the same applies hereinafter) as described above. When the pumps 5a, 5b are driven, the brake fluid in the eighth flow path 58 is sucked by the pumps 5a, 5b, and a vacuum is created in the vacuum chamber 6a of the suction valve 6 communicating with the eighth flow path 58 as illustrated in Fig. 13B.

Accordingly, as illustrated in Fig. 11C, the thin film drive unit 642 of the diaphragm 64 is subject to elastic deformation toward the one-way valve 61, and the upper surface of the plunger 62 comes into contact with the lower surface of the large diameter valve 613 to push the large diameter valve 613 upward. This upward pushing causes the large diameter valve 613 to move away from the seat.

Accordingly, as illustrated in Fig. 13B, the brake fluid on the master cylinder M side flows into the cut valve mounting hole 36 from the inlet port 21 through the first flow path 51 (see dotted arrows in the drawing). The brake fluid flowing into the cut valve mounting hole 36 flows into the sixth flow path 56 through the lateral side of the cut valve 7a in the valve-closed state and flows into the one-way valve mounting hole 38a through the interior of the sensor mounting hole 37 (see dotted arrows in the drawing). The brake fluid flowed into the one-way valve mounting hole 38a then flows into the vacuum chamber 6a and is sucked into one pump mounting hole 31 through the vertical hole 58a of the eighth flow path 58 (see solid arrows in the drawing). In association with this, the brake fluid flowed into the vacuum chamber 6a is sucked into the other pump mounting hole 31 through the vertical hole 58a, the lateral hole 58b, and the vertical hole 58c of the eighth flow path 58 (see dash-dot-dash arrow in the drawing).

The brake fluid sucked by the one pump mounting hole 31 is pressurized by the one pump 5a (for example, see Fig. 12(a)), flows from the third flow path 53 into the inlet valve mounting hole 32 through the fourth flow path 54, and then is discharged to the wheel brake R from the outlet port 22 through the fifth flow path 55 (see dotted arrows in the drawing) .

The brake fluid sucked by the other pump mounting hole 31 is pressurized by the pump 5b at a timing shifted from the one pump 5a by half a cycle (for example, see Fig. 12(b)), flows into the inlet valve mounting hole 32 from the third flow path 53 (vertical hole 53c) through the fourth flow path 54, and then is discharged to the wheel brake R from the outlet port 22 through the fifth flow path 55 (see dash-dot-dash arrows and dotted arrows in the drawing).

In other words, when the one pump 5a discharge the brake fluid, the other pump 5b sucks the brake fluid, and when the one pump 5a sucks the brake fluid, the other pump 5b discharges the brake fluid. Accordingly, the brake fluid with alleviated pulsation is discharged from the pumps 5a, 5b as illustrated in Fig. 12(c), and applies a brake to the wheel.

In the pressurization control in the operating state in which the brake pedal BP is operated, the cut valve 7a is brought into the valve-closed state by the control device 400, and the electric motor 200 is actuated to drive the pumps 5a, 5b (see Fig. 2, the same applies hereinafter) in the same manner. When the pumps 5a, 5b are driven, a vacuum is created in the vacuum chamber 6a of the suction valve 6 that communicates with the eighth flow path 58, which causes elastic deformation of the thin film drive unit 642 of the diaphragm 64 toward the one-way valve 61 in the same manner.

When a force of the plunger 62 pushing the small diameter valve 614 upward exceeds a resultant force of the pressing force on the master cylinder M side and the biasing force of the valve spring 614s acting on the small diameter valve 614, the small diameter valve 614 moves away from the valve seat 613b.

Accordingly, as illustrated in Fig. 13B, the brake fluid on the master cylinder M side flows into the one-way valve mounting hole 38a through the interiors of the inlet port 21, the first flow path 51, the cut valve mounting hole 36, the sixth flow path 56, and the interior of the sensor mounting hole 37. The brake fluid flowed into the one-way valve mounting hole 38a is then sucked by the pump mounting holes 31, 31 from the vacuum chamber 6a though the eighth flow path 58, and is discharged to the wheel brake R from the outlet port 22 through the third flow path 53, the fourth flow path 54, the inlet valve mounting hole 32, and the fifth flow path 55.

Note that when the brake fluid on the master cylinder M side flows into the vacuum chamber 6a, the brake hydraulic pressure on the master cylinder M side acts on the diaphragm 64, and the thin film drive unit 642 moves back toward the lid member 65 as described above.

While the pumps 5a, 5b are operated, the above-described actions are repeatedly performed and the brake fluid pressurized by the pumps 5a, 5b repeatedly acts on the wheel brake R.

In the brake hydraulic pressure control device U of the present embodiment, since the effective diameter L1 of the diaphragm 64 is larger than the inner diameter L3 of the one-way valve mounting hole 38a, which accommodates the one-way valve 61, enhancement of workability of the diaphragm 64 is achieved even when the brake hydraulic pressure from the master cylinder M side is relatively high. Therefore, improvement of the openability of the suction valve 6 is achieved.

Since the reservoir 4 and the suction valve 6 may be formed separately, miniaturization of the suction valve 6 itself is achieved. In addition, flexibility in layout property of each member is enhanced.

The one-way valve 61 includes the small diameter valve 614 and the large diameter valve 613. Accordingly, since biasing forces to be applied to the one-way valve 61 in the valve-closing direction may be set separately for the small diameter valve 614 and the large diameter valve 613, the biasing force for the small diameter valve 614 in the valve-closing direction does not have to be set to a large force more than necessary. In addition, during boosting, the large diameter valve 613 may be opened to secure the boosting capacity.

Since the large diameter valve 613 is provided so as to surround the small diameter valve 614, a combination of the small diameter valve 614 and the large diameter valve 613 may be configured to have a compact profile.

In addition, the small diameter valve 614, the large diameter valve 613, the valve seat 611a, the valve seat 613b, the valve springs 614s, 613s are unitized and attached to the one-way valve mounting hole 38a (base body 100). Therefore, assembleability of the suction valve 6 is improved. Accordingly, cost reduction is achieved.

In addition, since the lid member 65 is provided with the retaining portion 653, a component specific for retention does not have to be separately provided.

The seal portion 641 is provided with the first seal portion 643 and the cup seal portion 644. Accordingly, a side closer to the exterior of the base body 100 and an opposite side closer to the interior of the base body 100 may be sealed with separate seal portions. Therefore, improvement in sealing property of the diaphragm 64 is achieved.

In addition, providing the cup seal portion 644 may prevent the brake fluid from leaking out when receiving the brake fluid on the master cylinder M side, for example, in a case where the suction valve 6 is immobilized in the opened state. Therefore, improvement of sealing property is achieved.

Since the plunger has a substantially triangular shape in cross section orthogonal to the axial direction, a path may be formed easily on the outer peripheral surface of the plunger 62, which may contribute to improvement of communicability of the brake fluid. Furthermore, since the pressure may be canceled by equalizing the brake hydraulic pressures (received pressures) at the front and at the rear of the plunger 62, improvement of workability of the plunger 62 is achieved. Note that it is only required that the plunger 62 has a polygonal shape in cross section.

### (Second Embodiment)

A brake hydraulic pressure control device according to a second embodiment will be described. In the following, a description is given about a brake hydraulic pressure control device U corresponding to a rear wheel brake in a vehicle in which a brake unit for a front wheel and a brake unit for a rear wheel are separately provided as an example.

Note that a hydraulic pressure line indicated by a thick dash-dot-dash line in the description of a hydraulic pressure circuit U2 is a portion where the operating fluid boosted by a master cylinder M is acting on. In the same manner, a hydraulic pressure line indicated by a thick solid line is a portion where the boosted operating fluid is acting on, and a hydraulic pressure line indicated by a thick broken line is a portion where the operation fluid is sucked by the pump 5 and a vacuum is created.

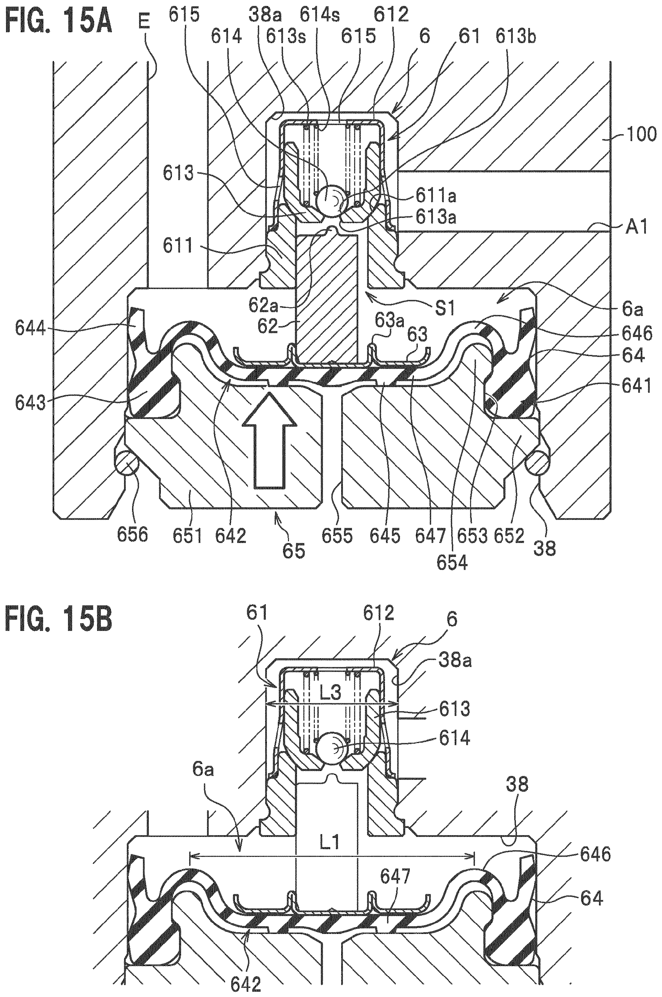

Fig. 15A and Fig. 15B are the same as Fig. 10A and Fig. 10B described above.

The present embodiment is different from the first embodiment in that the inlet valve 2 required for the hydraulic pressure circuit in the first embodiment is eliminated, and a control valve 2A corresponding thereto is provided instead. In other words, the present embodiment has a configuration in which the inlet valve is not present in the wheel hydraulic pressure line B (the second branch hydraulic pressure line B1) and in the discharge hydraulic pressure line C. Furthermore, the single pump 5 is driven by an electric motor 50.

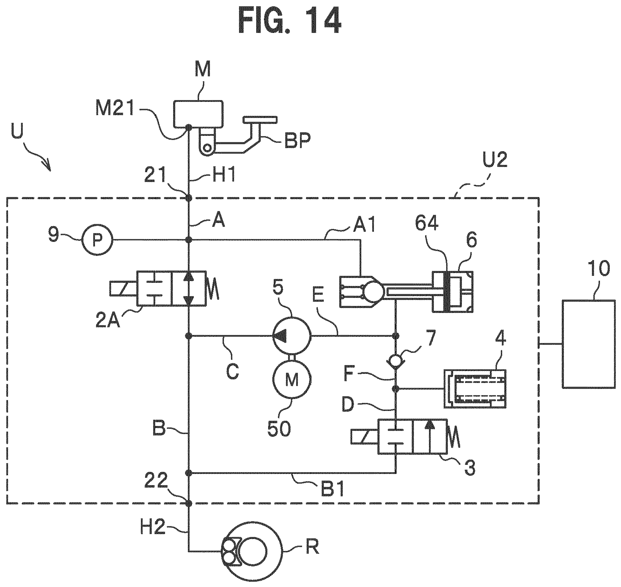

The brake hydraulic pressure control device U is provided with the hydraulic pressure circuit U2 illustrated in Fig. 14. The brake hydraulic pressure control device U can execute anti-locking braking control of a wheel brake R and pressurizing brake control of the wheel brake R.

The hydraulic pressure circuit U2 includes a control valve 2A, the outlet valve 3, the reservoir 4, the pump 5, the suction valve 6, the hydraulic pressure sensor 9, and the electric motor 50.

A control unit 10 configured to control opening and closing of the control valve 2A and the outlet valve 3, and to control driving of the pump 5 (driving of the electric motor 50) is connected to the hydraulic pressure circuit U2. The hydraulic pressure circuit U2 is filled with operating fluid.

Note that, in the present embodiment, the fluid path extending from the master cylinder M to the control valve 2A is referred to as "output hydraulic pressure line A", and a flow path extending from the control valve 2A to the wheel brake R is referred to as "wheel hydraulic pressure line B". A flow path extending from the pump 5 to the wheel hydraulic pressure line B is referred to as "discharge hydraulic pressure line C", and further, a flow path extending from the outlet valve 3 to the reservoir 4 is referred to as "release line D". A flow path extending from the suction valve 6 to the pump 5 is referred to as "intake hydraulic pressure line E", and a flow path extending from the release line D between the outlet valve 3 and the reservoir 4 to the intake hydraulic pressure line E is referred to as "return hydraulic pressure line F". A flow path extending from the release line D to the pump 5 is referred to as "intake hydraulic pressure line E". A flow path branched from the output hydraulic pressure line A and extending up to the suction valve 6 is referred to as "first branch hydraulic pressure line A1", and a flow path branched from the wheel hydraulic pressure line B and extending up to the outlet valve 3 is referred to as "second branch hydraulic pressure line B1".

Note that the hydraulic pressure circuit U2 is schematically illustrated, and a circuit configuration in which the valves are directly connected without intermediary of the fluid path is also possible, although not illustrated, in order to achieve the hydraulic pressure circuit U2.

The fluid paths connected to the master cylinder M (output hydraulic pressure line A and wheel hydraulic pressure line B) normally communicate the master cylinder M with the wheel brake R through the control valve 2A. Accordingly, the hydraulic pressure of the operating fluid generated by an operation of a brake pedal BP is transmitted to the wheel brake R.

The control valve 2A and the outlet valve 3 are provided on the fluid path connecting the master cylinder M and the wheel brake R.

The control valve 2A is a normally-opened linear solenoid valve interposed between the output hydraulic pressure line A and the wheel hydraulic pressure line B. The control valve 2A is configured to switch a state of conduction of the operating fluid from the output hydraulic pressure line A to the wheel hydraulic pressure line B between an allowing state and a blocked state.

The control valve 2A allows transmission of the operating fluid boosted by the master cylinder M to the wheel brake R when in the valve-opened state. The control valve 2A also blocks the operating fluid transmitted to the wheel brake R by being closed by the control unit 10 when the wheels are about to be locked.

The control valve 2A is closed under the control of the control unit 10 when performing the pressurizing brake control, which will be described later. When the hydraulic pressure of the operating fluid of the wheel hydraulic pressure line B exceeds the hydraulic pressure of the operating fluid of the output hydraulic pressure line A, and the difference in pressure between the hydraulic pressure of the operating fluid of the output hydraulic pressure line A and the hydraulic pressure of the operating fluid of the wheel hydraulic pressure line B exceeds an electromagnetic force for closing the valve, the electromagnetic force being controlled by energization to the solenoid, the control valve 2A releases the operating fluid of the wheel hydraulic pressure line B toward the output hydraulic pressure line A.

The outlet valve 3 is provided between the wheel brake R and the reservoir 4 (between the second branch hydraulic pressure line B1 and the release line D). The outlet valve 3 is normally closed but releases the operating fluid applied to the wheel brake R to the reservoir 4 by opening (releasing) when a rear wheel is about to be locked.

The reservoir 4 has a function of temporarily storing the operating fluid released by opening the outlet valve 3.

The pump 5 is provided between the intake hydraulic pressure line E and the discharge hydraulic pressure line C. The pump 5 is driven by a rotating force of the electric motor 50 based on a command from the control unit 10.

The pump 5 sucks the operating fluid stored in the reservoir 4 and discharges the same to the discharge hydraulic pressure line C. Furthermore, when the control valve 2A is in the valve-closed state and the suction valve 6 is in the valve-opened state, the pump 5 sucks the operating fluid stored in the master cylinder M, the first branch hydraulic pressure line A1, the intake hydraulic pressure line E, the reservoir 4 and the like and discharges the same to the discharge hydraulic pressure line C. Accordingly, the hydraulic pressure of the operating fluid generated by an operation of the brake pedal BP may be increased. Furthermore, even in the state in which the brake pedal BP is not operated, the operating fluid may be made act on the wheel brake R (pressurizing brake control).

Next, referring to the hydraulic pressure circuit U2 of the present embodiment, normal brake control, anti-locking braking control, and the pressurizing brake control realized by the control unit 10 will be described.

In the normal brake control, the control valve 2A is in the valve-opened state, the outlet valve 3 is in the valve-closed state, and further, a one-way valve 61 of the suction valve 6 is closed and thus the suction valve 6 is in the valve-closed state.

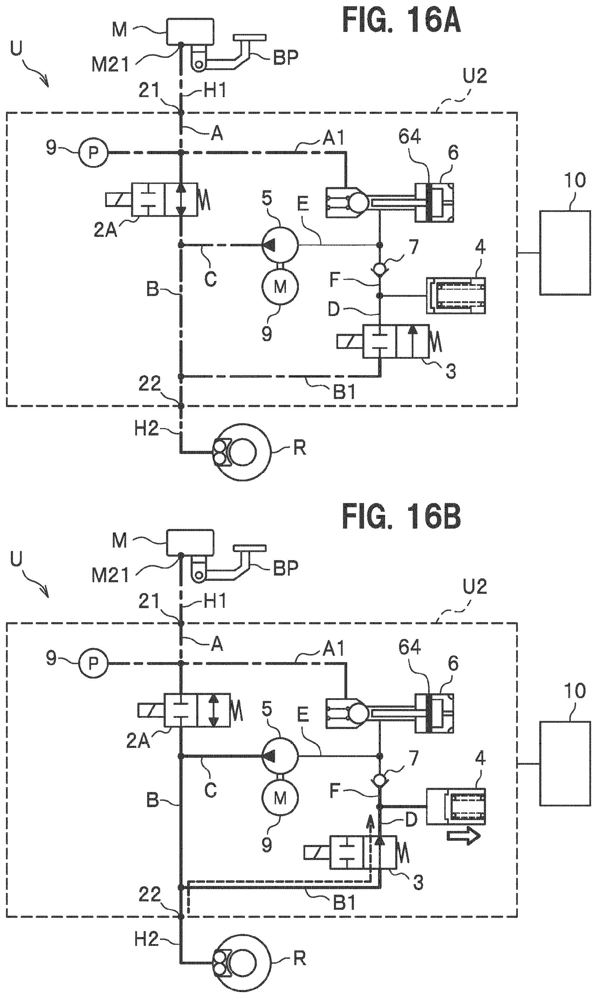

When the driver's foot presses the brake pedal BP in such a state, the hydraulic pressure of the operating fluid caused by the pressing force of the foot is transmitted as-is to the wheel brake R, so that a brake is applied to the wheel as illustrated in Fig. 16A.

Since the suction valve 6 is similar to that in the first embodiment described above, the operating fluid from the master cylinder M acts on the suction valve 6 via the output hydraulic pressure line A and the first branch hydraulic pressure line A1. Accordingly, the large diameter valve 613 and the small diameter valve 614 of the one-way valve 61 (see Fig. 15A, the same applies hereinafter) receive the operating fluid and are seated respectively, so that the valve-closed state of the suction valve 6 is maintained. In other words, the operating fluid from the master cylinder M does not act on the intake hydraulic pressure line E side.

### (Anti-Locking Braking Control)

When a pressure-decreasing mode is selected in the anti-locking braking control, the respective coils of the control valve 2A and the outlet valve 3 are excited by the control unit 10 as illustrated in Fig. 16B. Accordingly, the control valve 2A is brought into the valve-closed state, and the outlet valve 3 is brought into the valve-opened state. In this configuration, the operating fluid of the wheel hydraulic pressure line B communicating with the wheel brake R flows from the outlet valve 3 into the reservoir 4 through the release line D. Consequently, the pressure of the operating fluid acting on the wheel brake R is decreased.

During the pressure-decreasing mode of the anti-locking braking control, the operating fluid from the master cylinder M is applied to the suction valve 6 via the first branch hydraulic pressure line A1 in the same manner as during the normal brake control. Accordingly, the suction valve 6 maintains the valve-closed state in the same manner as described above.

The operating fluid stored in the reservoir 4 by the above-described pressure-decreasing is used when pressure-increasing for the anti-locking braking control described later. The operating fluid remained in the reservoir 4 after the termination of the anti-locking braking control is returned back to the master cylinder M**.**

In this case, when the anti-locking braking control is terminated, the control unit 10 demagnetizes the respective coils of the control valve 2A and the outlet valve 3. Accordingly, the control valve 2A is brought into the valve-opened state, and the outlet valve 3 is brought into the valve-closed state. In this state, the electric motor 50 is driven by the control unit 10, and the pump 5 is operated. The operating fluid stored in the reservoir 4 is then sucked by the pump 5 and is returned back from the pump 5 to the master cylinder M through the discharge hydraulic pressure line C**,** the wheel hydraulic pressure line B**,** the control valve 2A, and the output hydraulic pressure line A**.**

In this case as well, the operating fluid sucked by the pump 5 is returned back to the master cylinder M through the control valve 2A, and thus does not act on the wheel brake R on the wheel hydraulic pressure line B**.**

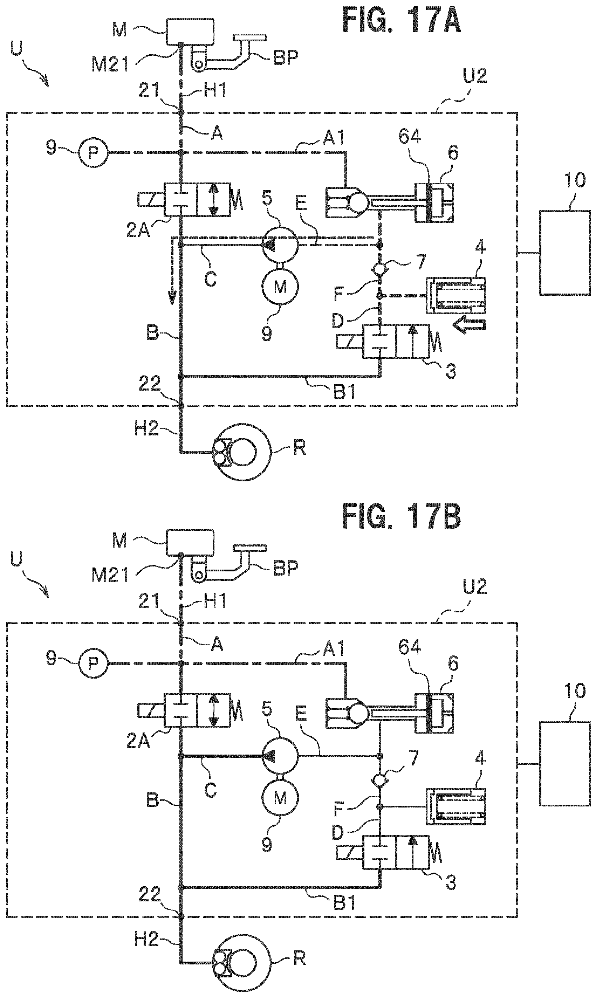

When the pressure-increasing mode is selected in the anti-locking braking control, the coil of the control valve 2A is excited and the coil of the outlet valve 3 is demagnetized by the control unit 10 as illustrated in Fig. 17A. Accordingly, the control valve 2A is brought into the valve-closed state, and the outlet valve 3 is brought into the valve-closed state. The suction valve 6 is also maintained in the valve-closed state in the same manner as described above. In this state, the electric motor 50 is driven by the control unit 10, and the pump 5 is operated. The operating fluid stored in the intake hydraulic pressure line E and the reservoir 4 is then sucked by the pump 5, and is discharged from the pump 5 through the discharge hydraulic pressure line C to the wheel hydraulic pressure line B. Accordingly, the pressure of the operating fluid acting on the wheel brake R is increased.

Note that, when the above described operating fluid stored in the intake hydraulic pressure line E and the reservoir 4 is not sufficient for boosting of the operating fluid to act on the wheel brake R, the operating fluid on the master cylinder M side is sucked for continuing the pressure-increasing control. The reason why the operating fluid stored in the reservoir 4 is sucked first will be described now. In other words, opening of the suction valve 6 is achieved when a vacuum is created in the vacuum chamber 6a that communicates with the intake hydraulic pressure line E, and a thin film drive unit 642 of the diaphragm 64 is subjected to elastic deformation toward the one-way valve 61 by an atmospheric pressure. In the state in which the operating fluid is stored in the reservoir 4, a spring provided on the reservoir 4 is in a state of biasing the piston of the reservoir 4 to return the same to its initial position, and thus the release line D, the return hydraulic pressure line F, and the intake hydraulic pressure line E are in the pressurized state. Accordingly, the suction valve 6 does not open until the pressurization from the reservoir 4 is no longer applied (until the operating fluid in the reservoir 4 is exhausted), and consequently, the operating fluid stored in the reservoir 4 is sucked first.

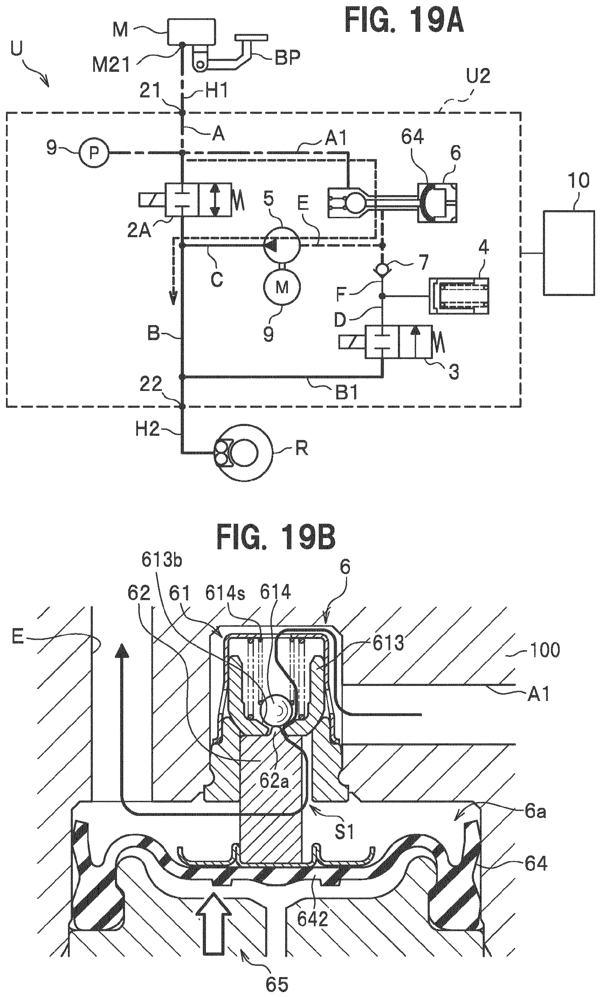

When the pressure-increasing control is continued, the operation of the pump 5 continues, and thus a vacuum is created in the intake hydraulic pressure line E. Consequently, as illustrated in Fig. 19B, a vacuum is created in the vacuum chamber 6a of the suction valve 6 that communicates with the intake hydraulic pressure line E, and the vacuum causes elastic deformation of the thin film drive unit 642 of the diaphragm 64 toward the one-way valve 61 by the atmospheric pressure. Accordingly, the protrusion 62a on an upper surface of the plunger 62 comes into contact with the small diameter valve 614. At this time, a pressing force of the hydraulic pressure of the operating fluid on the master cylinder M side caused by a pressing force of the driver's foot and a biasing force of the valve spring 614s act on the small diameter valve 614. Therefore, when a force of the plunger 62 pushing the small diameter valve 614 upward exceeds a resultant force of the pressing force and the biasing force acting on the small diameter valve 614, the small diameter valve 614 moves away from the valve seat 613b. In other words, the small diameter valve 614 is opened by a difference force between the push-up force and the resultant force described above.

When the small diameter valve 614 moves away from the seat, the first branch hydraulic pressure line A1 communicates with the vacuum chamber 6a through the space formed by separation and the space S1 of the plunger 62. This communication causes the operating fluid on the master cylinder M side to flow into the vacuum chamber 6a from the first branch hydraulic pressure line A1 through the one-way valve 61, and further, flows from the vacuum chamber 6a into the intake hydraulic pressure line E and is sucked by the pump 5.

At this time, when the operating fluid on the master cylinder M side flows into the vacuum chamber 6a, the hydraulic pressure of the operating fluid on the master cylinder M side acts on the diaphragm 64, and the thin film drive unit 642 moves back toward the lid member 65 (see Fig. 15A). Accordingly, a force of the plunger 62 pushing the small diameter valve 614 upward disappears and thus the small diameter valve 614 is seated on the valve seat 613b.

During the operation of the pump 5, the actions described above are repeatedly performed. In other words, opening and closing of the small diameter valve 614 are repeatedly performed and the pressure of the operating fluid increased by the pump 5 acts on the wheel brake R. Accordingly, the operating fluid acting on the wheel brake R is boosted.

When a maintenance mode is selected in the anti-locking braking control, the coil of the control valve 2A is excited and the coil of the outlet valve 3 is demagnetized by the control unit 10 as illustrated in Fig. 17B. Driving of the electric motor 50 is then stopped, and the pump 5 is stopped. Accordingly, the control valve 2A is brought into the valve-closed state, and the outlet valve 3 is brought into the valve-closed state. The suction valve 6 is also maintained in the valve-closed state in the same manner as described above. In this manner, the operating fluid is trapped in the flow paths (in the discharge hydraulic pressure line C, the wheel hydraulic pressure line B, and the second branch hydraulic pressure line B1) closed by the control valve 2A, the outlet valve 3, and the pump 5. Consequently, the hydraulic pressure of the operating fluid acting on the wheel brake R is maintained constant.

### (Pressurizing Brake Control)

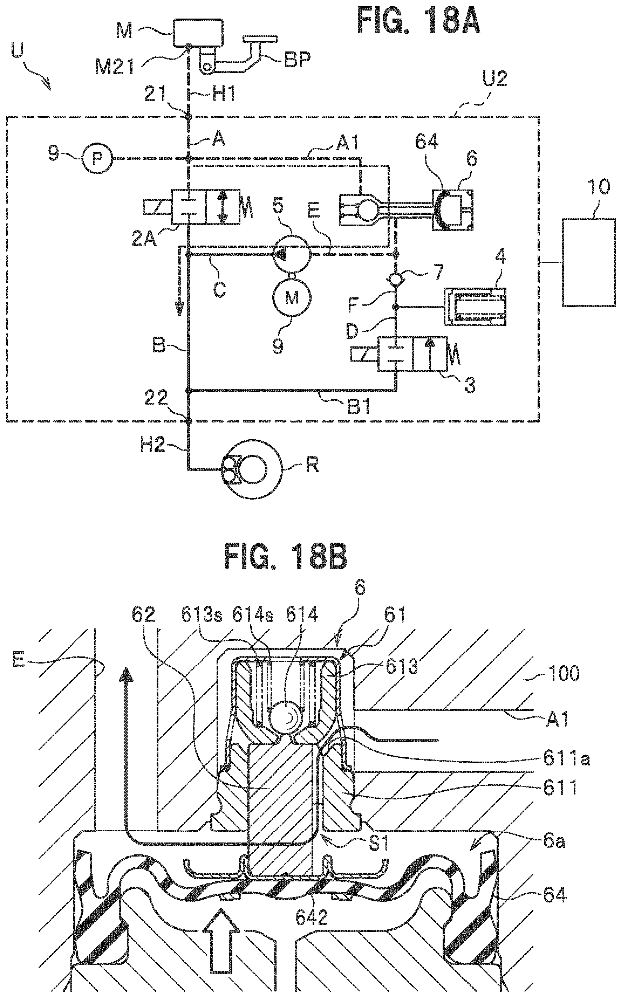

In the pressurizing brake control with the brake pedal BP not operated, the coil of the control valve 2A is excited and the coil of the outlet valve 3 is demagnetized by the control unit 10 as illustrated in Fig. 18A. Accordingly, the control valve 2A is brought into the valve-closed state, and the outlet valve 3 is brought into the valve-closed state. The suction valve 6 is in the valve-closed state in the same manner as described above (the valve-closed state is not illustrated in Fig. 18A). In this state, the electric motor 50 is driven by the control unit 10, and the pump 5 is operated.

When the pump 5 is operated, the operating fluid in the intake hydraulic pressure line E is sucked by the pump 5, and a vacuum is created in the intake hydraulic pressure line E. Note that when there is any operating fluid remaining in the reservoir 4, such operating fluid is also sucked by the pump 5. In this case as well, the operating fluid stored in the intake hydraulic pressure line E and the reservoir 4 is sucked first in the same manner as described above. When the operating fluid in the intake hydraulic pressure line E and the reservoir 4 is sucked by the pump 5, as illustrated in Fig. 18B, a vacuum is created in the vacuum chamber 6a of the suction valve 6 that communicates with the intake hydraulic pressure line E, and the vacuum causes elastic deformation of the thin film drive unit 642 of the diaphragm 64 toward the one-way valve 61 by the atmospheric pressure. The elastic deformation makes the upper surface of the plunger 62 come into contact with the lower surface of the large diameter valve 613 and pushes the large diameter valve 613 upward.

Accordingly, the large diameter valve 613 moves away from the annular valve seat 611a, and the first branch hydraulic pressure line A1 communicates with the vacuum chamber 6a through the space S1 of the plunger 62. This communication causes the operating fluid on the master cylinder M side to flow into the vacuum chamber 6a from the first branch hydraulic pressure line A1 through the one-way valve 61, and further, flows from the vacuum chamber 6a into the intake hydraulic pressure line E and is sucked by the pump 5.

The operating fluid pressurized by the pump 5 is discharged from the pump 5 to the wheel hydraulic pressure line B and acts on the wheel brake R. Accordingly, a brake is applied to the wheel.

In the pressurizing brake control with the brake pedal BP operated, the control valve 2A is brought into the valve-closed state and the outlet valve 3 is brought into the valve-closed state by the control unit 10 in the same manner as during pressure-increasing of the anti-locking braking control described above as illustrated in Fig. 19A. The suction valve 6 is in the valve-closed state in the same manner (the valve-closed state is not illustrated in Fig. 19A). In this state, the electric motor 50 is driven by the control unit 10, and the pump 5 is operated.

When the pump 5 is operated, a vacuum is created in the intake hydraulic pressure line E. Consequently, as illustrated in Fig. 19B, a vacuum is created in the vacuum chamber 6a of the suction valve 6 that communicates with the intake hydraulic pressure line E, and the vacuum causes elastic deformation of the thin film drive unit 642 of the diaphragm 64 toward the one-way valve 61 by the atmospheric pressure. Accordingly, the protrusion 62a on an upper surface of the plunger 62 comes into contact with the small diameter valve 614. At this time, a pressing force of the hydraulic pressure of the operating fluid on the master cylinder M side caused by a pressing force of the driver's foot and a biasing force of the valve spring 614s act on the small diameter valve 614. Therefore, when a force of the plunger 62 pushing the small diameter valve 614 upward exceeds a resultant force of the pressing force and the biasing force acting on the small diameter valve 614, the small diameter valve 614 moves away from the valve seat 613b. In other words, the small diameter valve 614 is opened by a difference force between the push-up force and the resultant force described above.

When the small diameter valve 614 moves away from the seat, the first branch hydraulic pressure line A1 communicates with the vacuum chamber 6a through the space formed by separation and the space S1 of the plunger 62. This communication causes the operating fluid on the master cylinder M side to flow into the vacuum chamber 6a from the first branch hydraulic pressure line A1 through the one-way valve 61, and further, flows from the vacuum chamber 6a into the intake hydraulic pressure line E and is sucked by the pump 5.

At this time, when the operating fluid on the master cylinder M side flows into the vacuum chamber 6a, the hydraulic pressure of the operating fluid on the master cylinder M side acts on the diaphragm 64, and the thin film drive unit 642 moves back toward the lid member 65 (see Fig. 15A). Accordingly, a force of the plunger 62 pushing the small diameter valve 614 upward disappears and thus the small diameter valve 614 is seated on the valve seat 613b.

During the operation of the pump 5, the actions described above are repeatedly performed. In other words, opening and closing of the small diameter valve 614 are repeatedly performed and the operating fluid boosted by the pump 5 acts on the wheel brake R**.** Accordingly, the pressure of the operating fluid acting on the wheel brake R is increased, and a brake is applied to the wheel.

In this case, when the hydraulic pressure of the operating fluid of the wheel hydraulic pressure line B boosted by the pump 5 exceeds the hydraulic pressure of the operating fluid of the output hydraulic pressure line A, and the difference in fluid pressure between both the operating fluids exceeds an electromagnetic force for closing the valve, the control valve 2A releases the operating fluid of the wheel hydraulic pressure line B toward the output hydraulic pressure line A**.**

Note that, also when the brake pedal BP is operated later in the pressurizing brake control when the brake pedal BP is not operated, the operating fluid pressurized by the pump 5 acts on the wheel brake R in the same manner as the pressurizing brake control when the brake pedal BP is operated described above.

When the pressurizing brake control is terminated, the operating fluid discharged by the above-described pressurizing brake control to the wheel hydraulic pressure line B is returned back to the master cylinder M after the termination of the pressurizing brake control. In other words, the coil of the control valve 2A is demagnetized by the control unit 10, and the pump 5 is stopped by stop of driving of the electric motor 50, so that the operating fluid is returned back from the wheel hydraulic pressure line B through the output hydraulic pressure line A to the master cylinder M**.**

In the brake hydraulic pressure control device U of the present embodiment described thus far, the normal brake control can be executed by transmitting the hydraulic pressure of the operating fluid generated according to the amount of operation of the brake pedal BP to the wheel brake R through the control valve 2A. Pressure-decreasing of the anti-locking braking control can be executed by closing the control valve 2A and opening the outlet valve 3 to release the hydraulic pressure of the operating fluid acting on the wheel brake R to the reservoir 4. Pressure-increasing for the anti-locking braking control can be executed by driving the pump 5 with the control valve 2A closed, and then sucking the operating fluid released to the reservoir 4 and the operating fluid from the master cylinder M and discharge the same toward the wheel brake R. Maintenance of the anti-locking braking control can be executed by closing the control valve 2A and the outlet valve 3.

Pressurizing brake control can be executed by opening the suction valve 6 with the control valve 2A closed, and driving the pump 5, and then sucking the operating fluid released to the reservoir 4 and the operating fluid from the master cylinder M and discharging the same toward the wheel brake R.

In the brake hydraulic pressure control device U of the present embodiment, since the control valve 2A has a function corresponding to the inlet valve, which is required in the hydraulic pressure circuit of the related art, the inlet valve may be substantially eliminated from the hydraulic pressure circuit U2. Therefore, reduction of the number of components is achieved.

The brake hydraulic pressure control device U is capable of desirably executing pressure-decreasing, pressure-increasing, and maintenance in the anti-locking braking control and pressurization in the pressurizing brake control based on at least one of the change in amount of operation of the brake pedal BP, the change in pressure of the operating fluid acting on the wheel brake R, and the change in wheel speed.

Since the suction valve 6 is opened by a pressure difference between the hydraulic pressure of the operating fluid on the master cylinder M side and the hydraulic pressure of the operating fluid on the intake port side of the pump 5, at which a vacuum is created by the operation of the pump 5, control by the control unit 10 is simplified, and reduction in costs is achieved.

### (Third Embodiment)

Next, a brake hydraulic pressure control device according to a third embodiment will be described. In this embodiment as well, a description is given about a brake hydraulic pressure control device U corresponding to a rear wheel brake in a vehicle in which a brake unit for the front wheel and a brake unit for the rear wheel are separately provided as an example.

The brake hydraulic pressure control device U of the present embodiment is different from those in the first and second embodiments in that a reservoir 66 is integrally provided on a suction valve 60A of a mechanical type. In a hydraulic pressure circuit U3 of the present embodiment, a flow path extending from the outlet valve 3 to the suction valve 60A is formed as one continuous flow path "a release line D". In the following description, the flow path extending from the release line D to the pump 5 is referred to as "intake hydraulic pressure line E1".

Note that the hydraulic pressure circuit U3 is schematically illustrated, and a circuit configuration in which valves are directly connected without intermediary of a fluid path is also possible, although not illustrated, in order to achieve the hydraulic pressure circuit U3.

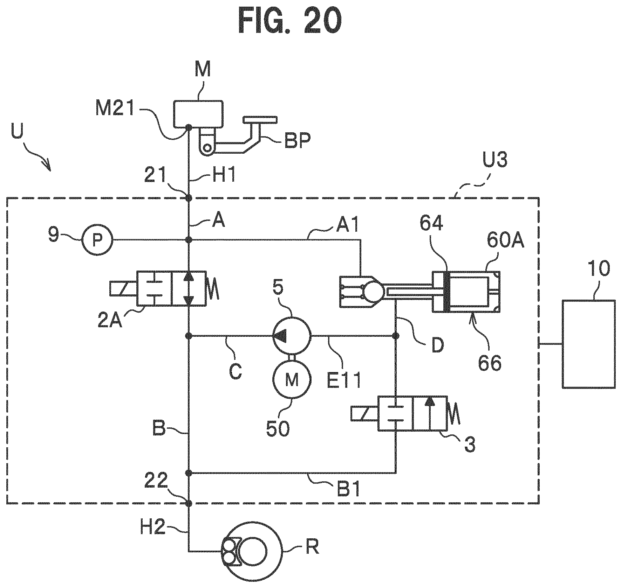

The brake hydraulic pressure control device U is provided with the hydraulic pressure circuit U3 illustrated in Fig. 20. The brake hydraulic pressure control device U can execute anti-locking braking control of a wheel brake R and pressurizing brake control of the wheel brake R**.**

The hydraulic pressure circuit U3 mainly includes a control valve 2A, an outlet valve 3, a pump 5, a suction valve 60A, a hydraulic pressure sensor 9, and an electric motor 50.

A control unit 10 configured to control opening and closing of the control valve 2A and the outlet valve 3 and control driving of the pump 5 (driving of the electric motor 50) is connected to the hydraulic pressure circuit U3. The hydraulic pressure circuit U3 is filled with operating fluid.

The suction valve 60A is configured to switch a state between a first branch hydraulic pressure line A1 and the release line D to an opened state and to a blocked state in the same manner as the second embodiment. The suction valve 60A is normally closed. The suction valve 60A is configured to be opened by a pressure difference between the hydraulic pressure of the operating fluid on a master cylinder M side (a first branched hydraulic pressure line A1 side) and the hydraulic pressure of the operating fluid on an intake port side (a release line D side) of the pump 5, at which a vacuum is created by an operation of the pump 5.

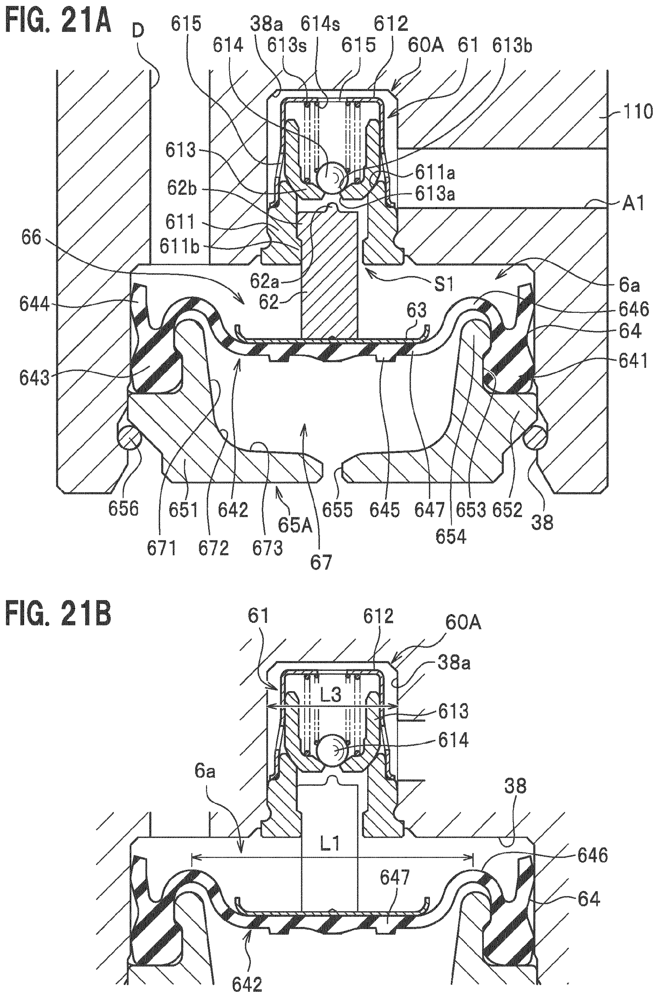

The suction valve 60A includes a normally-closed one-way valve 61, a plunger 62, a plunger plate 63, a diaphragm 64, and a lid member 65A as a plug for fixing the diaphragm 64 as illustrated in Fig. 21A in the same manner as the suction valve 6 of the second embodiment. The reservoir 66 is formed of the diaphragm 64 and a recessed portion 67 formed in the lid member 65A. The diaphragm 64 is subject to elastic deformation toward a bottom portion of the recessed portion 67. A vacuum chamber 6a partitioned by the diaphragm 64 is enlarged by the elastic deformation of the diaphragm 64, and functions as a reservoir chamber for temporarily storing the operating fluid. Hereinafter, the suction valve 60A of the present embodiment will be described mainly on points different from the suction valve 6 of the second embodiment.

A protruding portion 611b used for locking the plunger 62 is formed on an inner surface of a lower portion of a fixed portion 611 of the one-way valve 61 continuously in a circumferential direction. In contrast, a locking portion 62b to be used for locking the protruding portion 611b to the fixed portion 611 is formed on an outer surface of an upper portion of the plunger 62. The locking portion 62b is configured to come into contact with the protruding portion 611b of the fixed portion 611 from above.

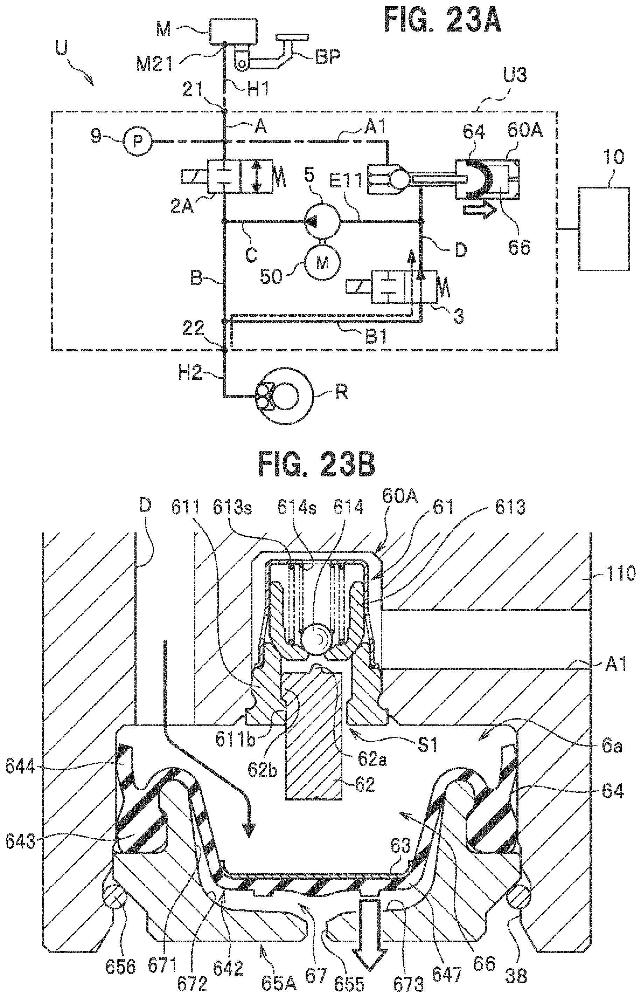

The plunger 62 is not fixed to an upper surface of the plunger plate 63 and is configured to be releasable from the plunger plate 63. In other words, as illustrated in Fig. 23B, when the diaphragm 64 is subject to elastic deformation toward an opening of a suction valve mounting hole 38, the plunger 62 is released from the plunger plate 63. In this case, the locking portion 62b of the plunger 62 is locked to the protruding portion 611b of the fixed portion 611 of the one-way valve 61, the plunger 62 is brought into a state of being held (state of being suspended) by the fixed portion 611. As illustrated in Fig. 21A, the plunger 62 is also brought into contact with the upper surface of the plunger plate 63 in the process in which the diaphragm 64 moves back to its initial position by upward elastic deformation.

The plunger plate 63 is formed into a flat plate shape in order to make the plunger 62 releasable without being caught. In the present embodiment, the annular rib 63a (see Fig. 15A) is not formed on the upper surface of the plunger plate 63.

The diaphragm 64 is elastically deformable toward the recessed portion 67 formed in the lid member 65A as illustrated in Fig. 23B. The diaphragm 64 is subject to elastic deformation into the recessed portion 67 upon reception of the operating fluid flowing into the vacuum chamber 6a through the release line D. The diaphragm 64 subjected to elastic deformation is then subject to elastic deformation toward the one-way valve 61, which is the opposite side from the recessed portion 67, by the operating fluid being sucked into the release line D by the pump 5, as described later.

The lid member 65A is formed into a bottomed cylindrical shape by having the recessed portion 67 as illustrated in Fig. 21A. The recessed portion 67 is formed at a radially center portion of a base portion 651 of the lid member 65A. The base portion 651 has a bottomed cylindrical shape.

The recessed portion 67 includes an inner surface portion 671 formed continuously from a lip portion 654, a corner portion 672 formed continuously from a lower portion of the inner surface portion 671, and a bottom surface portion 673 formed continuously from an end portion of the corner portion 672.

The inner surface portion 671 has a shape extending toward the opening of the suction valve mounting hole 38, which is a lower side, and gently narrowing into a tapered shape in cross section. The corner portion 672 has an arcuate shape in cross section and connects the inner surface portion 671 and the bottom surface portion 673. The bottom surface portion 673 is gently inclined toward a radially center portion of the recessed portion 67 in a funnel shape. An atmosphere communicating hole 655 communicating with the atmosphere is formed at a radially center portion of the bottom surface portion 673.

The recessed portion 67 configured as described above allows significant elastic deformation of the diaphragm 64 toward the opening of the suction valve mounting hole 38 as illustrated in Fig. 23B. The inner surface portion 671 and the corner portion 672 function also as a guide for guiding the diaphragm 64 toward the opening of the suction valve mounting hole 38 during the elastic deformation. This causes elastic deformation of the diaphragm 64 in a shape following the shape of the inner surface of the recessed portion 67, and prevents elastic deformation into an unintended shape.

Upon elastic deformation of the diaphragm 64 toward the opening of the suction valve mounting hole 38, a flat portion 647 of the diaphragm 64 opposes the bottom surface portion 673. The elastic deformation of the diaphragm 64 toward the opening of the suction valve mounting hole 38 enlarges a capacity of the vacuum chamber 6a partitioned by the diaphragm 64**.**

Next, referring to the hydraulic pressure circuit U3 of the present embodiment, normal brake control, anti-locking braking control, and pressurizing brake control realized by the control unit 10 will be described.

### (Normal Brake Control)

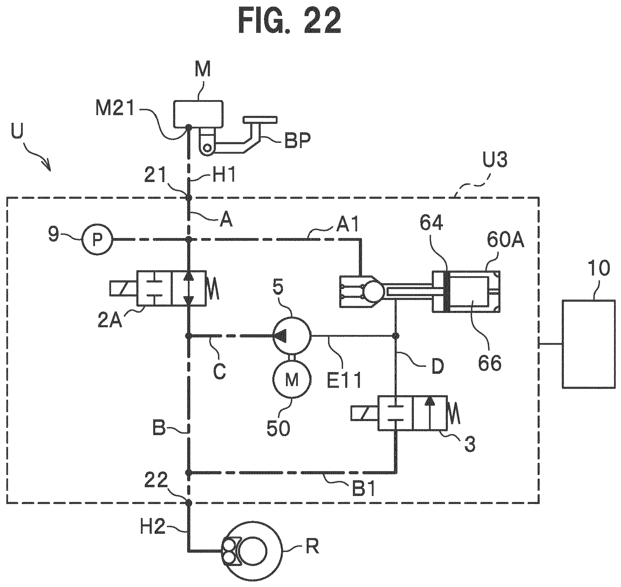

During the normal brake control in which the respective wheels have no probability of being locked, the electromagnetic coils of the control valve 2A and the outlet valve 3 are both demagnetized by the control unit 10 as illustrated in Fig. 22. In other words, in the normal brake control, the control valve 2A is in the valve-opened state, and the outlet valve 3 is in the valve-closed state. The one-way valve 61 of the suction valve 60A is closed and thus the suction valve 60A is in the valve-closed state.

When a driver's foot presses a brake pedal BP in such a state, the hydraulic pressure of the operating fluid caused by the pressing force of the foot is transmitted as-is to a wheel brake R through an output hydraulic pressure line A, the control valve 2A, and a wheel hydraulic pressure line B. Accordingly, a brake is applied to the wheel.

In this case, the operating fluid from the master cylinder M acts on the suction valve 60A via the first branch hydraulic pressure line A1. Accordingly, the large diameter valve 613 and the small diameter valve 614 of the one-way valve 61 (see Fig. 21A, the same applies hereinafter) receive the hydraulic pressure of the operating fluid and are seated respectively, so that the valve-closed state of the suction valve 60A is maintained. In other words, the operating fluid from the master cylinder M does not act on the release line D side.

### (Anti-Locking Braking Control)

When the pressure-decreasing mode is selected in the anti-locking braking control, the respective coils of the control valve 2A and the outlet valve 3 are excited by the control unit 10 as illustrated in Fig. 23A. Accordingly, the control valve 2A is brought into the valve-closed state, and the outlet valve 3 is brought into the valve-opened state. In this configuration, the operating fluid of the wheel hydraulic pressure line B communicating with the wheel brake R flows from the outlet valve 3 into the release line D via the second branch hydraulic pressure line B1, and then flows into the vacuum chamber 6a of the suction valve 60A.

When the operating fluid flows into the vacuum chamber 6a, upon reception of the operating fluid flowed therein, the diaphragm 64 is subject to elastic deformation toward the opening of the suction valve mounting hole 38 so as to follow the recessed portion 67 as illustrated in Fig. 23B. Accordingly, the capacity of the vacuum chamber 6a increases and the operating fluid is stored in the reservoir 66. Consequently, the pressure of the operating fluid acting on the wheel brake R is decreased.

Note that during a pressure-decreasing mode of the anti-locking braking control, the operating fluid from the master cylinder M is applied to the suction valve 60A in the same manner as during the normal brake control. Therefore, the large diameter valve 613 and small diameter valve 614 of the one-way valve 61 are seated to maintain the valve-closed state of the suction valve 60A. In other words, the operating fluid from the master cylinder M does not act on an intake hydraulic pressure line E11 side.

The operating fluid stored in the reservoir 66 by the above-described pressure-decreasing is used for pressure-increasing for the anti-locking braking control described later. The operating fluid remained in the reservoir 66 after the termination of the anti-locking braking control is returned back to the master cylinder M.

In this case, when the anti-locking braking control is terminated, the control unit 10 demagnetizes the respective coils of the control valve 2A and the outlet valve 3. Accordingly, the control valve 2A is brought into the valve-opened state, and the outlet valve 3 is brought into the valve-closed state. In this state, the electric motor 50 is driven by the control unit 10, and the pump 5 is operated. This makes the operating fluid stored in the reservoir 66 sucked by the pump 5 through the release line D and the intake hydraulic pressure line E11.

The operating fluid sucked by the pump 5 is discharged from the pump 5 through a discharge hydraulic pressure line C to the wheel hydraulic pressure line B and returns back to the master cylinder M from the control valve 2A through the output hydraulic pressure line A. The operating fluid sucked by the pump 5 returns back to the master cylinder M through the control valve 2A, and thus does not act on the wheel brake R on the wheel hydraulic pressure line B.

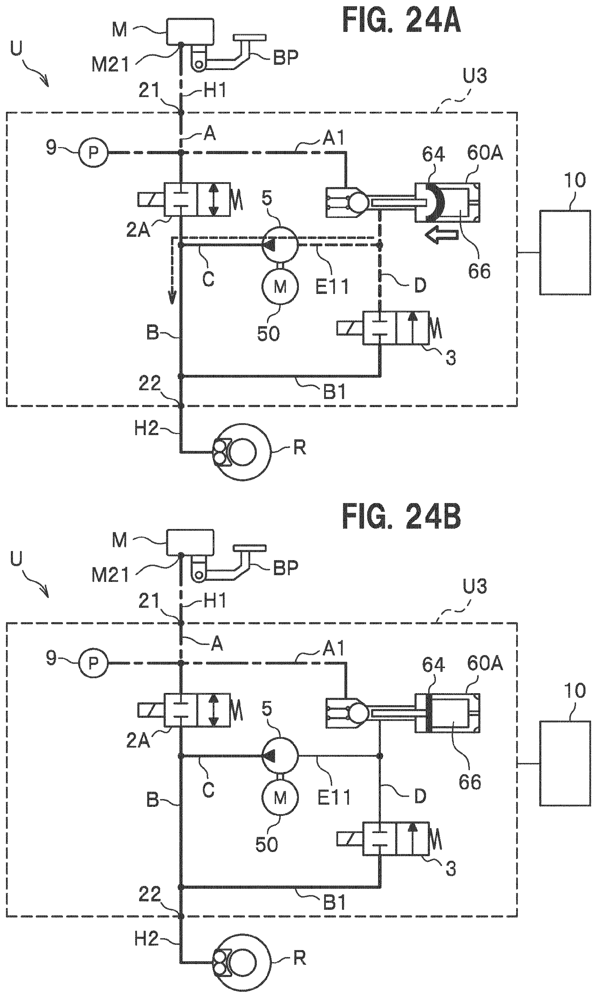

When the pressure-increasing mode is selected in the anti-locking braking control, the coil of the control valve 2A is excited and the coil of the outlet valve 3 is demagnetized by the control unit 10 as illustrated in Fig. 24A. Accordingly, the control valve 2A is brought into the valve-closed state, and the outlet valve 3 is brought into the valve-closed state. The suction valve 60A is in the valve-closed state in the same manner as described above. In this state, the electric motor 50 is driven by the control unit 10, and the pump 5 is operated. This makes the operating fluid stored in the release line D, the intake hydraulic pressure line E11 and the reservoir 66 to be sucked by the pump and discharged from the pump 5 through the discharge hydraulic pressure line C to the wheel hydraulic pressure line B. Accordingly, the pressure of the operating fluid acting on the wheel brake R is increased.

Note that, when the wheel speed is not reduced by the above-described pressure-increasing, the pressure-increasing control is continued. In other words, when the operating fluid stored in the release line D, the intake hydraulic pressure line E11 and the reservoir 66 is not sufficient for boosting the operating fluid acting on the wheel brake R, the pressure-increasing control is continued. In this case, the operating fluid stored in the reservoir 66 is sucked first. The reason is that the suction valve 60A does not open unless the operating fluid for the reservoir 66 is pumped out by the suction of the pump 5 and the diaphragm 64 returns to an initial position.

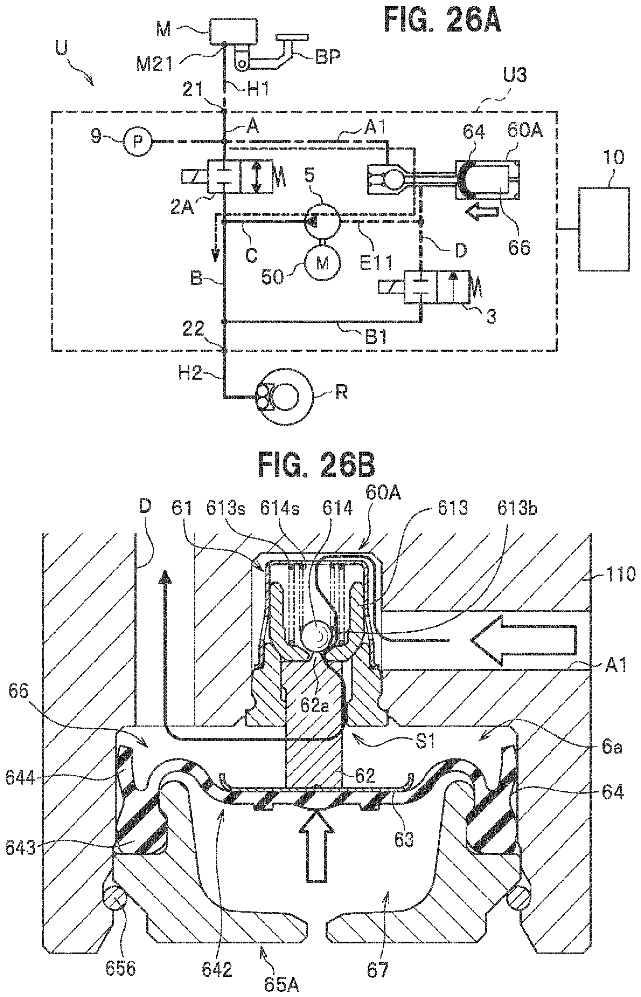

When the pressure-increasing control is continued, the operation of the pump 5 continues, and thus a vacuum is created in the release line D and the intake hydraulic pressure line E11. Consequently, as illustrated in Fig. 26B, a vacuum is created in the vacuum chamber 6a of the suction valve 60A that communicates with the release line D, and the vacuum causes elastic deformation of a thin film drive unit 642 of the diaphragm 64 toward the one-way valve 61 by the atmospheric pressure. Accordingly, the protrusion 62a on an upper surface of the plunger 62 comes into contact with the small diameter valve 614. At this time, a pressing force of the operating fluid on the master cylinder M side caused by a pressing force of the driver's foot and a biasing force of the valve spring 614s act on the small diameter valve 614. Therefore, when a force of the plunger 62 pushing the small diameter valve 614 upward becomes a state exceeding a resultant force of the pressing force and the biasing force acting on the small diameter valve 614, the small diameter valve 614 moves away from a valve seat 613b. In other words, the small diameter valve 614 is opened by a difference force between the push-up force and the resultant force described above.

When the small diameter valve 614 moves away from the seat, the first branch hydraulic pressure line A1 communicates with the vacuum chamber 6a through the space formed by separation and the space S1 of the plunger 62.

This communication causes the operating fluid on the master cylinder M side to flow into the vacuum chamber 6a from the first branch hydraulic pressure line A1 through the one-way valve 61, and further, flows from the vacuum chamber 6a into the release line D, the intake hydraulic pressure line E11 and is sucked by the pump 5.

At this time, when the operating fluid on the master cylinder M side flows into the vacuum chamber 6a, the operating fluid on the master cylinder M side acts on the diaphragm 64, and the thin film drive unit 642 moves back toward the lid member 65A. Accordingly, a force of the plunger 62 pushing the small diameter valve 614 upward disappears and thus the small diameter valve 614 is seated on the valve seat 613b.

During the operation of the pump 5, the actions described above are repeatedly performed. In other words, opening and closing of the small diameter valve 614 are repeatedly performed and the operating fluid boosted by the pump 5 acts on the wheel brake R. Accordingly, the pressure of the operating fluid acting on the wheel brake R is increased.

When a maintenance mode is selected in the anti-locking braking control, the coil of the control valve 2A is excited and the coil of the outlet valve 3 is demagnetized by the control unit 10 as illustrated in Fig. 24B. Driving of the electric motor 50 is then stopped, and the pump 5 is stopped. Accordingly, the control valve 2A is brought into the valve-closed state, and the outlet valve 3 is brought into the valve-closed state. The suction valve 60A is in the valve-closed state in the same manner as described above. In this manner, the operating fluid is trapped in the flow paths (in the discharge hydraulic pressure line C, the wheel hydraulic pressure line B, and the second branch hydraulic pressure line B1) closed by the control valve 2A, the outlet valve 3, and the pump 5. Consequently, the hydraulic pressure of the operating fluid acting on the wheel brake R is maintained constant.

### (Pressurizing Brake Control)

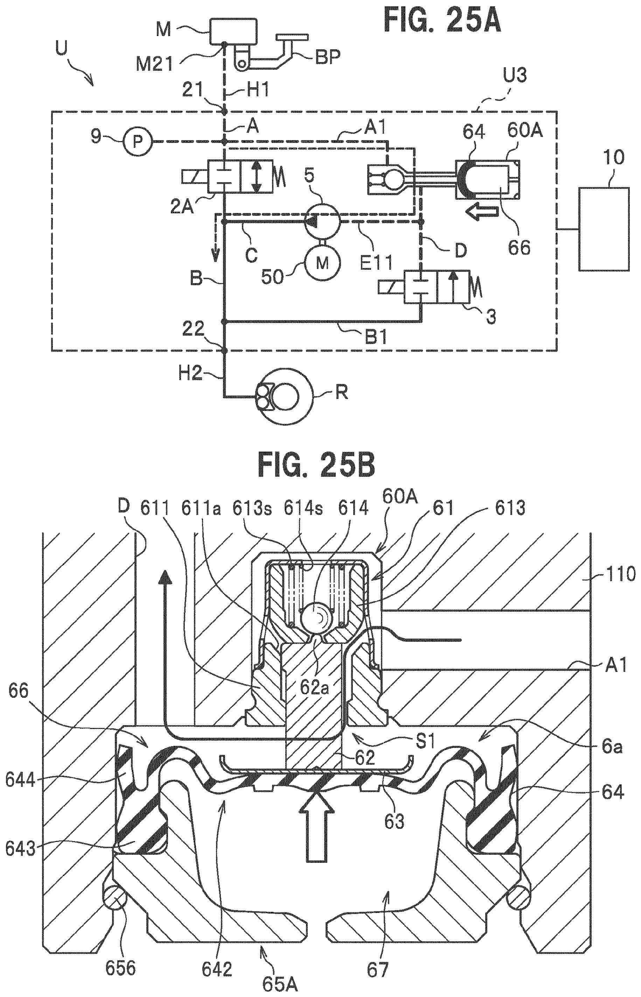

In the pressurizing brake control with the brake pedal BP not operated, the coil of the control valve 2A is excited and the coil of the outlet valve 3 is demagnetized by the control unit 10 as illustrated in Fig. 25A. Accordingly, the control valve 2A is brought into the valve-closed state, and the outlet valve 3 is brought into the valve-closed state. The suction valve 60A is in the valve-closed state in the same manner as described above (the valve-closed state is not illustrated in Fig. 25A). In this state, the electric motor 50 is driven by the control unit 10, and the pump 5 is operated.

When the pump 5 is operated, the operating fluid in the release line D and the intake hydraulic pressure line E11 is sucked by the pump 5, and a vacuum is created in the release line D. Accordingly, as illustrated in Fig. 25B, a vacuum is created in the vacuum chamber 6a of the suction valve 60A that communicates with the release line D, and the vacuum causes elastic deformation of the thin film drive unit 642 of the diaphragm 64 toward the one-way valve 61. The elastic deformation makes the upper surface of the plunger 62 come into contact with the lower surface of the large diameter valve 613 and pushes the large diameter valve 613 upward. Note that whether or not the large diameter valve 613 is pushed upward depends on a balance with the pressure on the master cylinder M side.

Accordingly, the large diameter valve 613 moves away from the annular valve seat 611a, and the first branch hydraulic pressure line A1 communicates with the vacuum chamber 6a through the space S1 of the plunger 62. This communication causes the operating fluid on the master cylinder M side to flow into the vacuum chamber 6a from the first branch hydraulic pressure line A1 through the one-way valve 61, and further, flows from the vacuum chamber 6a into the release line D and the intake hydraulic pressure line E11 and is sucked by the pump 5 (see Fig. 25A).

The operating fluid pressurized by the pump 5 is then discharged from the pump 5 to the wheel hydraulic pressure line B and acts on the wheel brake R. Accordingly, a brake is applied to the wheel.

In the pressurizing brake control with the brake pedal BP operated, the control valve 2A is brought into the valve-closed state and the outlet valve 3 is brought into the valve-closed state by the control unit 10 in the same manner as during pressure-increasing of the anti-locking braking control described above as illustrated in Fig. 26A. The suction valve 60A is in the valve-closed state in the same manner (the valve-closed state is not illustrated in Fig. 26A). In this state, the electric motor 50 is driven by the control unit 10, and the pump 5 is operated.

When a vacuum is created in the release line D and the intake hydraulic pressure line E11 by the pump 5 being driven, the thin film drive unit 642 of the diaphragm 64 is subject to elastic deformation toward the one-way valve 61 and moves the plunger 62 upward as illustrated in Fig. 26B. When a force of the plunger 62 pushing the small diameter valve 614 upward becomes a state of exceeding the resultant force acting on the small diameter valve 614, the small diameter valve 614 moves away from the valve seat 613b, and the operating fluid on the master cylinder M side flows into the vacuum chamber 6a through a space S1. The diaphragm 64 then returns back toward the lid member 65A by the operating fluid flowed therein, and the small diameter valve 614 is seated on the valve seat 613b.

During the pressurizing brake control, opening and closing of the small diameter valve 614 as described above are performed repeatedly, so that the operating fluid acts on the wheel brake R, so that a brake is applied to the wheel.

In this case, when the hydraulic pressure of the operating fluid of the wheel hydraulic pressure line B boosted by the pump 5 exceeds the hydraulic pressure of the operating fluid of the output hydraulic pressure line A, and the difference in fluid pressure between both the operating fluids exceeds an electromagnetic force for closing the valve, the control valve 2A releases and regulates the operating fluid of the wheel hydraulic pressure line B toward the output hydraulic pressure line A.

Note that, also when the brake pedal BP is operated later in the pressurizing brake control when the brake pedal BP is not operated, the operating fluid pressurized by the pump 5 acts on the wheel brake R in the same manner as the pressurizing brake control when the brake pedal BP is operated described above.

When the pressurizing brake control is terminated, the operating fluid discharged by the above-described pressurizing brake control to the wheel hydraulic pressure line B is returned back to the master cylinder M after the termination of the pressurizing brake control. In other words, the coil of the control valve 2A is demagnetized by the control unit 10, and the pump 5 is stopped by stop of driving of the electric motor 50, so that the operating fluid is returned back from the wheel hydraulic pressure line B through the output hydraulic pressure line A to the master cylinder M.

In the brake hydraulic pressure control device U of the present embodiment described thus far, the diaphragm 64 is subject to elastic deformation and is swelled toward the lid member 65A, for example, by a flow of operating fluid relieved from the wheel brake R at the time of pressuredecreasing of the anti-locking braking control into the vacuum chamber 6a in the suction valve mounting hole 38, so that the vacuum chamber 6a (reservoir chamber) is changed in capacity and the operating fluid is accommodated. In this manner, since the reservoir 66 can be configured in a simple configuration using the elastic deformation of the diaphragm 64, the number of components may be reduced to reduce costs.

The lid member 65A closes the one-way valve mounting hole 38a as an accommodating part and fixes the diaphragm 64 in the one-way valve mounting hole 38a. Therefore, the diaphragm 64 can be fixed reliably to the base body 110 by the lid member 65A. This advantageous effect also applies to the configuration with the lid member 65 of the second embodiment.

In addition, since the atmosphere communicating hole 655 is formed in the lid member 65A, the recessed portion 67 on the lid member 65A side of the diaphragm 64 can easily be communicated with the atmosphere side.

Although the embodiment of the present invention has been described thus far, the present invention is not limited to the embodiment described above, and modifications may be made without departing the scope of the present

### invention as defined by the appended claims.

In the embodiment described above, the brake hydraulic pressure control device U relating to the rear wheel brake R has been described. However, the brake hydraulic pressure control device U relating to the front wheel brake is also applicable by replacing the brake pedal BP with a brake operation element.

Further, the sensor mounting hole 37 may be formed to have the same diameter as the outlet valve mounting hole 33. In this case, the sensor mounting hole 37 may have the same shape as the outlet valve mounting hole 33.

In addition, the suction valve mounting hole 38 may be formed to have an inner diameter different from that of the reservoir mounting hole 34.

Furthermore, the positions of the small diameter valve 614 or the large diameter valve 613 in the one-way valve 61 may be set as needed.

### Reference Signs List

2 inlet valve
2A control valve
3 outlet valve
5, 5a, 5b pump
6 suction valve
38 suction valve mounting hole (mounting hole)
61 one-way valve
62 plunger
64 diaphragm
65, 65A lid member (plug)
614 small diameter valve
613 large diameter valve
641 seal portion
643 first seal portion
644 cup seal portion
653 retaining part
100, 110 base body
L1 effective diameter
L3 inner diameter of one-way valve mounting hole (inner diameter of accommodating part)
M master cylinder
R wheel brake
U vehicle brake hydraulic pressure control device

## Claims

1. A vehicle brake hydraulic pressure control device (U) provided between a master cylinder (M) and a wheel brake (R) and including a base body (100; 110), a pump (5, 5a, 5b), and a drive source (50) for driving the pump, comprising:
a suction valve (6) disposed between the master cylinder and intake ports of the pump, wherein
the suction valve is
opened by a pressure difference between a brake hydraulic pressure on a master cylinder side and a brake hydraulic pressure on an intake port side of the pumps, at which a vacuum is created when the pumps are operated, and
comprises a normally-closed one-way valve (61) and a plunger (62) configured to come into contact with and open a valve body (613, 614) of the one-way valve, and a diaphragm (64) configured to push the plunger and bias the one-way valve in a valve-opening direction when a vacuum is created on the intake port side by an operation of the pump;
the one-way valve is accommodated in an accommodating part (38a) provided in the base body; and
an effective diameter (L1) of the diaphragm is larger than an inner diameter (L3) of the accommodating part,
**characterized in that**
the base body (100, 110) comprises a mounting hole (38) for accommodating the suction valve (6);
an annular seal portion (641) configured to come into tight contact with an inner peripheral surface of the mounting hole is formed on the diaphragm (64); and
the seal portion comprises:
an annular first seal portion (643) configured to come into tight contact with the inner peripheral surface of the mounting hole on the opening side, and
an annular cup seal portion (644) extending continuously from the first seal portion and extending to a side of the mounting hole opposite from an opening and configured to come into tight contact with the inner peripheral surface of the mounting hole.

2. The vehicle brake hydraulic pressure control device according to Claim 1, wherein the one-way valve (61) comprises a small diameter valve (614) and a large diameter valve (613) larger in diameter than the small diameter valve.

3. The vehicle brake hydraulic pressure control device according to Claim 2, wherein the large diameter valve (613) is provided so as to surround the small diameter valve (614).

4. The vehicle brake hydraulic pressure control device according to any one of Claims 1 to 3, further comprising a valve seat (611a, 613b) on which the one-way valve is to be seated and a valve spring (614s, 613s) for biasing the one-way valve, wherein the one-way valve (61), the valve seat and the valve spring are unitized and attached to the base body (100, 110).

5. The vehicle brake hydraulic pressure control device according to any one of Claims 1 to 4, further comprising a plug (65, 65A) configured to close an opening side of the accommodating part and fix the diaphragm (64) in the accommodating part.

6. The vehicle brake hydraulic pressure control device according to Claim 5, wherein the accommodating part is provided with a reservoir (4) in which a reservoir chamber is formed by the diaphragm (64) swelling toward the plug (65A).

7. The vehicle brake hydraulic pressure control device according to Claim 5 or Claim 6, further comprising a retaining part (653) configured to engage the diaphragm (64) in the plug (65, 65A).

8. The vehicle brake hydraulic pressure control device according to any one of Claims 5 to 7, comprising an atmosphere communicating hole (655) communicating with atmosphere formed in the plug (65, 65A).

9. The vehicle brake hydraulic pressure control device according to any one of Claims 1 to 8, wherein the plunger (62) has a polygonal shape in cross section orthogonal to an axial direction thereof.

## Patentansprüche

1. Steuerungsvorrichtung für den Bremshydraulikdruck einer Fahrzeugbremse (U), die zwischen einem Hauptzylinder (M) und einer Radbremse (R) bereitgestellt ist, einen Grundkörper (100; 110), eine Pumpe (5, 5a, 5b) und eine Antriebsquelle (50) zum Antrieb der Pumpe einschließt, Folgendes umfasst:
ein Saugventil (6), das zwischen dem Hauptzylinder und den Einlassöffnungen der Pumpe angeordnet ist, wobei
das Saugventil
durch eine Druckdifferenz zwischen einem Bremshydraulikdruck auf einer Hauptbremszylinderseite und einem Bremshydraulikdruck auf einer Ansaugseite der Pumpen geöffnet wird, bei der bei dem Betrieb der Pumpen ein Unterdruck erzeugt wird, und
umfasst ein normalerweise geschlossenes Einwegventil (61) und einen Kolben (62), der so konfiguriert ist, dass er mit einem Ventilkörper (613, 614) des Einwegventils in Kontakt kommt und diesen öffnet, und eine Membran (64), die so konfiguriert ist, dass sie den Kolben drückt und das Einwegventil in eine Ventilöffnungsrichtung verschiebt, wenn durch einen Betrieb der Pumpe auf der Einlassanschlussseite ein Vakuum erzeugt wird;
das Einwegventil in einem Aufnahmeteil (38a) untergebracht ist, das in dem Grundkörper bereitgestellt ist; und
ein effektiver Durchmesser (L1) der Membran größer ist als ein Innendurchmesser (L3) des Aufnahmeteils,
**dadurch gekennzeichnet, dass**
der Grundkörper (100, 110) ein Montageloch (38) zur Aufnahme des Saugventils (6) umfasst;
auf der Membran (64) ein ringförmiger Dichtungsabschnitt (641) ausgebildet ist, der so konfiguriert ist, dass er engen Kontakt mit einer inneren peripheren Oberfläche des Montagelochs hat; und
der Dichtungsabschnitt Folgendes umfasst:
einen ringförmigen ersten Dichtungsabschnitt (643), der so konfiguriert ist, dass er engen Kontakt mit der inneren peripheren Oberfläche des Montagelochs auf der Öffnungsseite hat, und
einen ringförmigen Dichtungsmanschettenabschnitt (644), der sich kontinuierlich von dem ersten Dichtungsabschnitt erstreckt und sich zu einer Öffnung gegenüberliegenden Seite des Montagelochs erstreckt und so konfiguriert ist, dass er engen Kontakt mit der inneren peripheren Oberfläche des Montagelochs hat.

2. Steuerungsvorrichtung für den Bremshydraulikdruck einer Fahrzeugbremse nach Anspruch 1, wobei das Einwegventil (61) ein Ventil mit kleinem Durchmesser (614) und ein Ventil mit großem Durchmesser (613) umfasst, das einen größeren Durchmesser als das Ventil mit kleinem Durchmesser aufweist.

3. Steuerungsvorrichtung für den Bremshydraulikdruck einer Fahrzeugbremse nach Anspruch 2, wobei das Ventil mit großem Durchmesser (613) so bereitgestellt ist, dass es das Ventil mit kleinem Durchmesser (614) umgibt.

4. Steuerungsvorrichtung für den Bremshydraulikdruck einer Fahrzeugbremse nach einem der Ansprüche 1 bis 3, weiter umfassend einen Ventilsitz (611a, 613b), auf dem das Einwegventil sitzen soll, und eine Ventilfeder (614s, 613s) zum Vorspannen des Einwegventils, wobei das Einwegventil (61), der Ventilsitz und die Ventilfeder vereint und an dem Grundkörper (100, 110) befestigt sind.

5. Steuerungsvorrichtung für den Bremshydraulikdruck einer Fahrzeugbremse nach einem der Ansprüche 1 bis 4, weiter umfassend einen Stopfen (65, 65A), der so konfiguriert ist, dass er eine Öffnungsseite des Aufnahmeteils schließt und die Membran (64) im Aufnahmeteil fixiert.

6. Steuerungsvorrichtung für den Bremshydraulikdruck einer Fahrzeugbremse nach Anspruch 5, wobei das Aufnahmeteil mit einem Vorratsbehälter (4) versehen ist, in dem durch die zum Stopfen (65A) hin aufquellende Membran (64) eine Vorratskammer gebildet ist.

7. Steuerungsvorrichtung für den Bremshydraulikdruck einer Fahrzeugbremse nach Anspruch 5 oder Anspruch 6, weiter umfassend ein Halteteil (653), das so konfiguriert ist, dass die Membran (64) in den Stopfen (65, 65A) eingreift.

8. Steuerungsvorrichtung für den Bremshydraulikdruck einer Fahrzeugbremse nach einem der Ansprüche 5 bis 7, umfassend ein Atmosphärenkommunikationsloch (655), das mit der in dem Stecker (65, 65A) gebildeten Atmosphäre kommuniziert.

9. Steuerungsvorrichtung für den Bremshydraulikdruck einer Fahrzeugbremse nach einem der Ansprüche 1 bis 8, wobei der Kolben (62) eine polygonale Form in dem Querschnitt orthogonal zu einer axialen Richtung davon aufweist.

## Revendications

1. Dispositif (U) de commande de pression hydraulique de frein de véhicule prévu entre un cylindre maître (M) et un frein de roue (R) et incluant un corps de base (100 ; 110), une pompe (5, 5a, 5b) et une source d'entraînement (50) pour entraîner la pompe, comprenant :
une vanne d'aspiration (6) disposée entre le cylindre maître et les orifices d'admission de la pompe, dans lequel
la vanne d'aspiration est
ouverte par une différence de pression entre une pression hydraulique de freinage d'un côté de cylindre maître et une pression hydraulique de freinage d'un côté d'orifice d'admission des pompes, à laquelle une dépression est créée lorsque les pompes fonctionnent, et
comprend une vanne unidirectionnelle (61) normalement fermée et un piston (62) configuré pour entrer en contact avec un corps de vanne (613, 614) de la vanne unidirectionnelle et l'ouvrir, et un diaphragme (64) configuré pour pousser le piston et orienter la vanne unidirectionnelle dans une direction d'ouverture de vanne lorsqu'une dépression est créée du côté de l'orifice d'admission par une opération de la pompe ;
la vanne unidirectionnelle est logée dans une partie de logement (38a) prévue dans le corps de base ; et
un diamètre effectif (L1) du diaphragme est supérieur à un diamètre intérieur (L3) de la partie d'accueil,
**caractérisé en ce que**
le corps de base (100, 110) comprend un orifice de montage (38) pour loger la vanne d'aspiration (6) ;
une portion d'étanchéité annulaire (641) configurée pour entrer en contact étroit avec une surface périphérique interne du trou de montage est formée sur le diaphragme (64) ; et
la portion d'étanchéité comprend :
une première portion d'étanchéité annulaire (643) configurée pour entrer en contact étroit avec la surface périphérique interne du trou de montage du côté d'ouverture, et
une partie (644) de joint à coupelle annulaire s'étendant en continu à partir de la première partie de joint et s'étendant jusqu'à un côté du trou de montage opposé à une ouverture et configurée pour entrer en contact étroit avec la surface périphérique interne du trou de montage.

2. Dispositif de commande de pression hydraulique de frein de véhicule selon la revendication 1, dans lequel la vanne unidirectionnelle (61) comprend une vanne de petit diamètre (614) et une vanne de grand diamètre (613) de plus grand diamètre que la vanne de petit diamètre.

3. Dispositif de commande de pression hydraulique de frein de véhicule selon la revendication 2, dans lequel la vanne de grand diamètre (613) est prévue de manière à entourer la vanne de petit diamètre (614).

4. Dispositif de commande de pression hydraulique de frein de véhicule selon l'une quelconque des revendications 1 à 3, comprenant en outre un siège de vanne (611a, 613b) sur lequel la vanne unidirectionnelle doit être placée et un ressort de vanne (614s, 613s) pour orienter la vanne unidirectionnelle, dans lequel la vanne unidirectionnelle (61), le siège de vanne et le ressort de vanne sont unifiés et fixés au corps de base (100, 110).

5. Dispositif de commande de pression hydraulique de frein de véhicule selon l'une quelconque des revendications 1 à 4, comprenant en outre un bouchon (65, 65A) configuré pour fermer un côté d'ouverture de la partie réceptrice et fixer le diaphragme (64) dans la partie réceptrice.

6. Dispositif de commande de pression hydraulique de frein de véhicule selon la revendication 5, dans lequel la partie de logement est pourvue d'un réservoir (4) dans lequel une chambre de réservoir est formée par le diaphragme (64) gonflant vers le bouchon (65A).

7. Dispositif de commande de pression hydraulique de frein de véhicule selon la revendication 5 ou la revendication 6, comprenant en outre une pièce de retenue (653) configurée pour engager le diaphragme (64) dans le bouchon (65, 65A).

8. Dispositif de commande de pression hydraulique de frein de véhicule selon l'une quelconque des revendications 5 à 7, comprenant un orifice de communication d'atmosphère (655) communiquant avec l'atmosphère formée dans le bouchon (65, 65A).

9. Dispositif de commande de pression hydraulique de frein de véhicule selon l'une quelconque des revendications 1 à 8, dans lequel le piston (62) présente une forme polygonale en section transversale orthogonale à une direction axiale de celuici.
